(19) Europäisches Patentamt
European Patent Office
Office européen des brevets

(11) **EP 2 615 518 B1**

(12) **EUROPÄISCHE PATENTSCHRIFT**

(45) Veröffentlichungstag und Bekanntmachung des Hinweises auf die Patenterteilung:
**29.03.2017   Patentblatt 2017/13**

(51) Int Cl.:
*G05D 23/19* (2006.01)      *B29C 45/78* (2006.01)
*B29C 35/02* (2006.01)      *B29C 35/04* (2006.01)
*B29K 101/10* (2006.01)

(21) Anmeldenummer: **13151134.7**

(22) Anmeldetag: **14.01.2013**

(54) **Verfahren zur Aufheizung und Regelung der Temperatur eines mit einem flüssigen und/oder dampfförmigen Wärmeträger beheizten Fertigungswerkzeuges**

Method for heating and temperature control of a manufacturing tool heated with a liquid and/or vapour medium

Procédé de mise en temperature et de régulation de la température d'un outil de fabrication chauffé par un fluide en phase liquide et/ou vapeur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2012   DE 102012100327**

(43) Veröffentlichungstag der Anmeldung:
**17.07.2013   Patentblatt 2013/29**

(73) Patentinhaber: **Mitras Composites Systems GmbH**
**01471 Radeburg (DE)**

(72) Erfinder:
• **Liehr, Erich, Dr.**
**01458 Ottendord-Okrilla (DE)**
• **Ott, Stefan**
**01217 Dresden (DE)**
• **Steinbach, Kai**
**01109 Dresden (DE)**
• **Saalbach, Holger**
**01445 Radebeul (DE)**

(74) Vertreter: **Weidner Stern Jeschke Patentanwälte Partnerschaft**
**Postfach 80 03 19**
**99029 Erfurt (DE)**

(56) Entgegenhaltungen:
**DE-A1- 4 307 347      US-A- 3 735 805**

• **KOTZAB W: "EXAKTE TEMPERIERUNG BEI GERINGEM KOSTENAUFWAND", PLASTVERARBEITER, HUETHIG GMBH, HEIDELBERG, DE, Bd. 35, Nr. 5, 31. Mai 1984 (1984-05-31), Seiten 74-81, XP001172778, ISSN: 0032-1338**

**Beschreibung**

Die Erfindung bezieht sich auf Verfahren zur Aufheizung und Regelung der Temperatur eines mit einem flüssigen und/oder dampfförmigen Wärmeträger beheizten Werkzeuges mit mindestens einem Heizkreislauf zur Formgebung und/oder Fixierung von Formteilen aus wärmehärtbaren oder vernetzungsfähigen Werkstoffen. In der kunststoffverarbeitenden und Gummi-Industrie werden zur Herstellung von Formteilen polymere Werkstoffe eingesetzt, deren Verarbeitungs- bzw. Formgebungsprozess unter Zuführung von Wärme erfolgt. Vernetzungsfähige bzw. vernetzbare oder wärmehärtbare polymere Werkstoffe werden zur Herstellung von Erzeugnissen bzw. Formteilen aus Duromeren oder Gummi (vulkanisierte Natur- oder Synthesekautschuke) eingesetzt. Dabei handelt es sich in der Regel um reaktive Formmassen, bei denen im Fertigungsablauf durch gezielte Wärmezufuhr eine irreversible Vernetzungsreaktion ausgelöst wird, die je nach chemischer Struktur der Formmasse eine Polymerisation, Polyaddition, Polykondensation oder Vulkanisation ist. Die Temperaturführung für die erforderliche Wärmezufuhr muss so geregelt werden, dass während der Überführung der Formmasse in den formbaren Zustand und der Formgebung noch keine Vernetzungsreaktion stattfindet. Nach Abschluss der Formgebungsphase ist die Wärmezufuhr so zu regeln, dass ein gleichmäßig hoher Vernetzungsgrad bei möglichst kurzen Zykluszeiten erreicht wird, verbunden mit einer hohen Formteilgenauigkeit während der gesamten Herstellungsdauer der Erzeugnisse. Als Formgebungs- und Fixierungsverfahren kommen beispielsweise Spritzgießen, Spritzprägen oder Formpressen in Frage, in spezifischen Fällen erfolgt die temperaturgesteuerte Formfixierung auch im Autoklaven oder Reaktionskesseln.

In Abhängigkeit von der Formteilgestaltung sind einer oder mehrere Heizkreisläufe im Werkzeug vorgesehen, die von einem geeigneten Heizmedium durchströmt werden. Die erforderliche Werkzeugtemperatur ist von einer Vielzahl an Faktoren abhängig, wie z.B. Art der Formmasse, Wanddicke des Formteils, Anforderungen an Schwindung, Verzug und Maßhaltigkeit sowie Entformungsbedingungen. Der Einsatz von Dampf spielt im Vergleich zu anderen fluiden Heizmedien eine untergeordnete Rolle. In der Gummi-Industrie wird z.B. Dampf zur Beheizung von Pressen zur Vulkanisation von Reifen eingesetzt. Der Nachteil von Dampf zur Beheizung von Werkzeugen, die eine konstante Werkzeugtemperatur erfordern, ist der hohe regelungstechnische Aufwand, da Dampf kein konstanter Volumenstrom ist, wie dies z.B. bei Wasser oder Öl als Heizmedium der Fall ist. Bei Einsatz von Sattdampf ist zu berücksichtigen, dass in der Dampfableitung Kondensat entsteht, das abgeführt werden muss.

Die vorliegende Erfindung bezieht sich vorzugsweise auf solche Prozessvorgänge, die eine kontinuierliche Beheizung mittels Dampf, insbesondere Sattdampf, erfordern, ist aber nicht auf diesen Wärmeträger beschränkt, sondern auch für Prozesse geeignet, bei denen als Wärmeträger Wasser oder Öl zur Anwendung kommt. Bei einer Beheizung mittels Dampf durchströmt das Heizmedium im Werkzeug mindestens einen Kanal als Heizkreislauf mit Vor- und Rücklauf und gibt dabei die erforderliche Wärme an die Formmasse ab, um deren Formgebung sowie Aushärtung und/oder Vernetzung zu ermöglichen.

Aus der DE 4 141 996 A1 ist zur Regelung des Formgebungsprozesses für vernetzende Formmaterialien bekannt, als Parameter die mit der Vernetzung erfolgende Reaktionsgeschwindigkeit heranzuziehen. Zur Regelung der Werkzeugtemperatur zur Verarbeitung vernetzungsfähiger polymerer Werkstoffe ist lediglich aus der Praxis bekannt, dass als Stellgröße der Dampfdruck dient, wobei durch Veränderungen des Dampfdruckes die Isttemperatur an die Solltemperatur angepasst werden soll.

Eine derartige Regelung ist für die Herstellung von Formteilen aus vernetzungsfähigen Formmassen zu ungenau und ermöglicht keine qualitätsgerechte Fertigung.

In der US 3 735 805 A sind ein Verfahren und eine Vorrichtung zur Temperaturregelung von Gießmaschinen, wie z.B. Spritzgießmaschinen, zur Verarbeitung warmverformbarer Materialien offenbart, wobei die Regelung der Temperatur von Form, Düse und einzelner Zonen des Plastifizierzylinders mittels eines heißen und kühleren Wärmeträgers nach dem Prinzip der Dreipunkt-Temperaturregelung erfolgt.

Aus der DE 4 307 347 A1 ist ein Verfahren zur Temperierung einer Spritzgießform bekannt, wobei über einen Messfühler eine Mehrzahl von Durchflusssteuerventilen für das Kühl- bzw. Heizmedium gesteuert wird und in Abhängigkeit von der Abweichung der gemessenen Ist-Temperatur von der gewünschten Soll-Temperatur Kühl- oder Heizmedium zugeführt wird.

In der Zeitschrift Plastverarbeiter, Bd. 35, Nr. 5, (1984), S. 74 bis 81, werden Methoden zur exakten Temperierung bei geringem Kostenaufwand bei der Verarbeitung von thermoplastischen Werkstoffen mittels Spritzgießen vorgestellt, u.a. auch ein mikroprozessorgesteuertes Temperatur-Kontrollsystem für Spritzgießwerkzeuge.

Aufgabe der Erfindung ist es, den Stand der Technik zu verbessern. Insbesondere ist es vor dem dargestellten Stand der Technik die technische Aufgabe für die Formgebung und/oder Fixierung von Formteilen, aus wärmehärtbaren oder vernetzungsfähigen Werkstoffen eine qualitativhochwertige Aushärtung und Vernetzung der Werkstoffe in kurzen Fertigungszeiten zu schaffen. Erfindungsgemäß wird die Aufgabe durch die im Anspruch 1 angegebenen Merkmale gelöst. Vorteilhafte Ausgestaltungen und Weiterbildungen der Verfahrensweise sind Gegenstand der Ansprüche 2 bis 15.

Vor Beginn des Aufheiz- und Regelungsprozesses wird im Speicher der Steuer- und Regeleinheit ein heizkreisspezifisches Heizprofil als Basis für die Regelung der Werkzeugtemperatur hinterlegt. Dieses wird vorab anhand vorliegender Erfahrungen und Kenntnisse aus dem praktischen Betrieb zur Formgebung und/oder Fixierung von Formteilen aus wärmehärtbaren oder vernetzungsfähigen Werkstoffen erstellt. Der Aufheiz- und Regelungsprozess wird in mindestens zwei Perioden, eine Aufheizperiode mit mindestens einer Aufheizphase und mindestens einer Einschwenkphase und eine stationäre Heizperiode mit unterschiedlichem Regelverhalten, unterteilt. Während der Perioden wird das Wärmeträgermedium, z.B. Dampf, Wasser oder Öl, dem Heizkreislauf zugeführt. Im Prozessverlauf kann das entsprechende Medium abwechselnd, sowohl im flüssigen als auch im dampfförmigen Zustand zum Einsatz kommen.

In der Einschwenkphase wird die Zufuhr an Wärmeträgermedium zeitgesteuert intermittierend unterbrochen um die Isttemperatur dosiert und schwingungsfrei an die Solltemperatur heranzuführen, denn die Temperatur des Wärmeträgermediums ist wie bei allen Heizprozessen typisch, stets höher als die jeweils gewünschte heizkreisspezifische Solltemperatur.

Erstmalig während der ersten Einschwenkphase wird die Isttemperatur am Werkzeug unmittelbar an der Eintrittsstelle des Wärmeträgermediums in das Werkzeug gemessen. Die Zuführung des Wärmeträgermediums in der Heizperiode wird in Abhängigkeit vom Soll-/Ist-Temperaturvergleich zeitgesteuert unterbrochen, derart, dass Wärmeträgermedienimpulse unterschiedlicher Zeitdauer gebildet werden mit erforderlichenfalls zeitgesteuerten vollständigen Unterbrechungen der Zufuhr an Wärmeträgermedium als Pausenzeiten. Anstelle von Zeitdauer wird im Zusammenhang mit Medienimpulsen auch der Begriff Impulslänge gebraucht.

Die zeit- und/oder temperaturabhängigen Veränderungen erfolgen durch Steuerung der Zufuhrmenge an Wärmeträgermedium über ein in eine "offene" und "geschlossene" Stellung betätigbares Ventil, wobei die Betätigung des Ventils über einen vorgegebenen Regelalgorithmus vorgenommen wird.

Diese Verfahrensweise hat gegenüber bekannten herkömmlichen Regelverfahren folgende Vorteile:

- Kurze Aufheizzeiten in der Aufheizphase, da mit dem maximal verfügbaren Heizmedienvolumenstrom gearbeitet werden kann. In der bisherigen konventionellen Temperierpraxis wird zumeist, um ein Überschwingen der Isttemperatur während des Aufheizprozesses zu vermeiden, bereits in dieser Phase mit einem gedrosselten Heizvolumenstrom gearbeitet. Die konventionelle Heizmethode ist deshalb durch längere Aufheizzeiten gekennzeichnet.

- Schnelles Erreichen der stationären Heizperiode ohne Überschwingen der gewünschten Solltemperatur durch einen sich selbstständig als Funktion des Aufheizcharakters, der Solltemperatur und der Isttemperatur anpassenden Einschwenkalgorithmus.

- Sehr genaue Einhaltung der Solltemperatur in der stationären Heizphase durch feinfühlige temperaturabhängige, zeitmoduliert intermittierend arbeitende Regelung. Thermodynamische Störungen wie z.B. Veränderungen der Heizmedientemperatur, des -druckes oder des -volumenstromes werden sofort erkannt und in ihrer negativen Wirkung auf die Isttemperatur durch sofort wirkende regelungstechnische Anpassungsalgorithmen ausgeglichen. Daraus resultieren eine höhere Prozessstabilität und verbesserte Qualitätskonstanz gegenüber den konventionellen Heizmethoden, die dadurch gekennzeichnet sind, dass mit einem mehr oder weniger stark gedrosselten stetigen Heizvolumenstrom gearbeitet wird.

- Kürzere Zykluszeiten, Qualitätsverbesserungen und Energieeinsparung im Fertigungsprozess dadurch, dass das Zeitmodul der stationären Heizphase und der Fertigungszyklus automatisch zeitlich so synchronisiert werden, dass der pro Fertigungszyklus auszulösende Heizmedienimpuls immer zum technologisch günstigen Zeitpunkt, d.h., in zeitlicher Nähe zum Formgebungsvorgang, erfolgt.

In der Praxis gibt es Anwendungsfälle, z.B. Spritzprägen von Leuchtengrundkörpern aus SMC (flächige mit UP Harz vorimprägnierte, heißhärtende Formmasse), Formpressen von Montageplatten aus Vincolit (Phenolharzpressmasse) und Spritzgießen von Leuchtengrundkörpern aus BMC (kurzfaserige mit UP Harz vorimprägnierte, heißhärtende Formmasse), wo nur eine oder mehrere Heizperioden stattfinden und die erfindungsgemäße Verfahrenswese bereits zu vorgenannten Vorteilen führt.

Schließt sich an die Heizperiode eine Fertigungsperiode an, wie z.B. beim Spritzgießen, Spritzpressen oder Formpressen so wird während der Fertigungsperiode die Regelung der Temperatur im Werkzeug mindestens in analoger Weise wie während der Heizperiode vorgenommen.

Das Heizprofil kann aus mindestens einem Aufheizmodul mit Aufheizzeiten in Abhängigkeit von der vorgegebenen Solltemperatur und heizkreisspezifischen Aufheizcharakteristiken, einem ersten und einem zweiten Einschwenkmodul mit Werten zur Einschwenkdauer in Abhängigkeit von der Solltemperatur und den Aufheizcharakteristiken, und einem Impulszeitmodul mit Sollimpulszeiten für die Wärmeträgerzufuhr in Abhängigkeit von der Solltemperatur und den Aufheizcharakteristiken, gebildet werden. Die einzelnen Module sind einer bestimmten Temperatur des Wärmeträgers zugeordnet und vor Aufheizbeginn wird heizkreisspezifisch eine Aufheizcharakteristik ausgewählt. Die Heizprofile werden unter Bezugnahme auf das zum Einsatz kommende Heizmedium erstellt.

Gehören zu einem Werkzeug mehrere Heizkreisläufe, so werden diese unabhängig voneinander geregelt. In der Aufheizperiode wird die durch kontinuierliche Wärmeträgerzuführung definierte Aufheizphase beendet, unter der Annahme, eine aus dem Heizprofil bei einer vorbestimmten Aufheizcharakteristik zugeordnete Isttemperatur liegt um einen bestimmten Betrag von 2 bis 10% der Solltemperatur, unterhalb der Solltemperatur. Während der ersten Einschwenkphase werden zeitmoduliert sich degressiv verkürzende Wärmeträgerimpulse eingeleitet, um die Isttemperatur dosiert an die Solltemperatur heranzuführen, wobei der erstmalige Vergleich der Isttemperatur mit der Solltemperatur zu Beginn des letzten Zeitmoduls dieser Einschwenkphase vorgenommen wird. Bei Abweichungen der Isttemperatur von der Solltemperatur, die größer als ein unterer Grenzwert unterhalb der Solltemperatur oder größer als ein oberer Grenzwert oberhalb der Solltemperatur sind, wird eine Verlängerung oder Verkürzung, erforderlichenfalls bis auf den Wert 0, der Wärmeträgerimpulsdauer des letzten Zeitmoduls der ersten Einschwenkphase vorgenommen. Am Ende der ersten Einschwenkphase wird ein zweiter Vergleich der Soll-/Ist-Temperatur durchgeführt wird, wobei bei Abweichungen innerhalb eines Toleranzbereiches der Übergang in die stationäre Heizperiode erfolgt, und bei Abweichungen, die außerhalb des Toleranzbereiches liegen, regelungstechnisch weitere Korrekturen eingeleitet werden.

Die Zeitdauer der Wärmeträgerimpulse für die erste zeitmodulierte degressive Einschwenkphase wird nach der Berechnungsformel (1) ermittelt, wobei die Einschwenkdauer aus dem ersten Einschwenkmodul abgeleitet wird. Im Ergebnis des am Ende der ersten Einschwenkphase durchgeführten Soll-/Ist-Temperaturvergleiches werden erforderliche Korrekturen z.B. wie folgt vorgenommen:

a) bei um 5 bis 15 °K zu niedriger Isttemperatur wird zuerst eine Nachheizzeit eingeleitet, deren Zeitdauer für die Wärmeträgereinleitung aus dem Aufheizmodul in der Weise abgeleitet wird, dass die Differenz zwischen der Aufheizzeit bei der gewählten Solltemperatur und der Aufheizzeit bei der gemessenen Isttemperatur gebildet und mit einem Dämpfungsfaktor zwischen 0,5 und 0,9 multipliziert wird und unmittelbar danach eine zweite zeitmodulierte degressive Einschwenkphase eingeleitet wird, deren Zeitdauer für den Wärmeträgerimpuls gemäß Gleichung (1) berechnet wird, unter Berücksichtigung der aus dem zweiten Einschwenkmodul abgeleiteten Einschwenkdauer; oder

b) bei um mehr als 15 °K zu niedriger Isttemperatur wird regelungstechnisch automatisch ein Wechsel in eine Aufheizcharakteristik mit längerer Aufheizdauer vorgenommen und eine Nachheizzeit ausgelöst, die in Abhängigkeit von der Höhe der Abweichung gemäß der Formel (2) berechnet wird, und danach eine zweite zeitmodulierte degressive Einschwenkphase eingeleitet und analog weiter geregelt wird wie nach Einleitung der zweiten Einschwenkphase gemäß a); oder

c) bei um 5 bis 15 °K zu hoher Isttemperatur findet zuerst eine Heizpause statt, deren Zeitdauer als Differenz aus den der Ist- und Solltemperatur zugeordneten Zeiten im Aufheizmodul ermittelt wird, multipliziert mit einem vorgegebenen Dämpfungsfaktor zwischen 0,5 und 0,9, und danach wird eine zeitmodulierte progressive Einschwenkphase mit vorgegebener Einschwenkdauer eingeleitet, wobei die Impulszeitdauer der pro Zeitmodul einzuleitenden Wärmeträgerimpulse gemäß Berechnungsformel (3) ermittelt wird; oder

d) bei um mehr als 15 °K zu hoher Isttemperatur wird regelungstechnisch automatisch ein Wechsel in eine Aufheizcharakteristik mit kürzerer Aufheizdauer vorgenommen, wobei zuerst eine "Heizpause" erfolgt, um die Isttemperatur zu verringern, deren Zeitdauer als Differenz zwischen der Aufheizzeit bei Solltemperatur gemäß der ursprünglich gewählten Aufheizcharakteristik und der Aufheizzeit bei Solltemperatur gemäß der neuen Aufheizcharakteristik mit kürzerer Aufheizdauer, multipliziert mit einem Dämpfungsfaktor zwischen 0,5 und 0,9, ermittelt wird, und danach eine zeitmodulierte progressive Einschwenkphase mit Wärmeträgerimpulsen analog c) eingeleitet wird.

Bei Einleitung einer progressiven Einschwenkphase wird eine Zeitdauer, die dem von 5 bis 15, vorzugsweise 10fachen, des gewählten Zeitmoduls entspricht, vorgegeben, wobei die zeitliche Vorgabe als Korrelation zwischen dem Dämpfungsfaktor und der Einschwenkdauer in der Weise wirkt, dass bei größer gewähltem Dämpfungsfaktor die Einschwenkdauer kleiner zu bemessen ist und umgekehrt.

Während der stationären Heizperiode wird der Mittelwert der Temperatur, die vom Beginn des jeweiligen Wärmeträgerimpulses über eine Messzeit von 40 bis 90%, vorzugsweise 75%, der auszulösenden Impulslänge ermittelt, und in Abhängigkeit von der gemessenen Temperaturdifferenz zwischen dem Mittelwert der Isttemperatur und der Solltemperatur zum Ende der Messzeit ein Korrekturwert ermittelt über den nach der Messzeit die weitere Zeitdauer des aktuellen Wärmeträgerimpulses verkürzt oder verlängert wird.

Der Korrekturwert zur Verkürzung oder Verlängerung des aktuellen Wärmeträgerimpulses wird nach der Berechnungsformel (4) ermittelt.

Während der Regelung in der stationären Heizperiode wird nach Einleitung des ersten Wärmeträgerimpulses für alle Folgeimpulse eine "gleitende" Anpassung der Sollimpulslänge vorgenommen, wenn die Abweichungen zwischen Ist- und Solltemperatur mindestens 0,5 °K betragen und das Vorzeichen der aktuell ermittelten Temperaturabweichung mit den in einer festgelegten Anzahl unmittelbar vorangegangener Temperiermedienimpulse ermittelten Abweichungen übereinstimmt, wobei eine neue Sollimpulsdauer nach der Berechnungsformel (5) ermittelt wird.

Bei Fertigungsverfahren, wie zum Beispiel beim Spritzgießen, -prägen oder Formpressen, die durch ein zyklisches Arbeitsprinzip gekennzeichnet sind, wird die Fertigungsperiode dann eingeleitet, wenn ein vorgegebener Toleranzwert einer Regelabweichung beim Vergleich Soll-/Ist-Temperatur in der stationären Heizperiode mindestens einmal unterschritten wurde.

Vorzugsweise wird die Zuführung des Wärmeträgermediums während der Fertigungsperiode mit dem Zeitpunkt zur Auslösung eines Signals aus der Ablaufsteuerung der Fertigungsmaschine synchronisiert.

In der nachfolgenden Fertigungsperiode wird die Regelung gemäß der stationären Heizperiode beibehalten, wobei das Einleiten eines Wärmeträgerimpulses durch das Signal aus der Ablaufsteuerung der Fertigungsmaschine ausgelöst wird und regelungstechnisch die Einleitung und zeitliche Bemessung von Wärmeträgerimpulsen an den Zeitpunkt der zyklussynchronen Signalauslösung und die Dauer des Fertigungszyklus angepasst werden.

In der Fertigungsperiode wird zur Anpassung der Einleitung und zeitlichen Bemessung von Wärmeträgerimpulsen an den Zeitpunkt für das Auslösen des Signals aus der Ablaufsteuerung der Fertigungsmaschine wahlweise eine zeitmodulierte, oder eine zyklusmodulierte Regelung, bei der die Zykluszeit der Verarbeitungsmaschine das Zeitmodul bildet, oder eine kombinierte zeitmodulierte und zyklusmodulierte Regelung vorgenommen.

Bei Ausführung einer zeitmodulierten Regelung der Fertigungsperiode wird in zwei Fälle unterschieden, wobei im ersten Fall, wenn zum Zeitpunkt der Auslösung des ausgewählten Signals aus der Ablaufsteuerung der Fertigungsmaschine bereits Wärmeträgermedium zugeführt wird, nachfolgend ab diesem Zeitpunkt Wärmeträgermedium mit der berechneten Sollimpulsdauer eingeleitet und eine verlängerte Pausenzeit nach Gleichung (6) ermittelt, und ausgelöst wird.

Im zweiten Fall, wenn zum Zeitpunkt der Auslösung des ausgewählten Signals aus der Ablaufsteuerung der Fertigungsmaschine das Stellventil für die Zufuhr des Wärmeträgermediums geschlossen ist, wird dieses wieder geöffnet und der Wärmeträger mit der berechneten Sollimpulsdauer eingeleitet und nachfolgend eine Unterbrechung der Wärmeträgerzufuhr in Form einer verlängerten Pausenzeit nach Gleichung (7) ermittelt und ausgelöst.

Bei zyklusmodulierter Regelung kann die Zykluszeit vorgegeben sein oder sie wird aus der Zeit zwischen zwei identischen Signalen benachbarter Zyklen aus der Ablaufsteuerung der Verarbeitungsmaschine ermittelt. Mit der vorliegenden Zykluszeit wird nach Gleichung (8) die Sollimpulszeit der zyklusmodulierten Fertigungsperiode berechnet. Der Sollimpuls wird mit Beginn des Signals aus der Maschinenablaufsteuerung ausgelöst. Bei Überschreitungen der gemessenen aktuellen Zykluszeit von einem vorgegebenen Sollwert wird im Folgezyklus eine Anpassung der Wärmeträgerimpulsdauer gemäß Gleichung (9) vorgenommen.

Bei einer Unterbrechung der Zyklusdauer über ein vorgegebenes Zeitmaß wird automatisch wieder auf zeitmodulierte Regelung umgeschaltet.

Innerhalb eines Fertigungszyklus kann auch, vor allem bei sehr langen Zykluszeiten, erst eine zykluszeitmodulierte Regelung durchgeführt und nach einer festgelegten Zeitdauer bis zum Zyklusende automatisch auf zeitmodulierte Regelung umgeschaltet werden. Die Zeitdauer des Zeitmoduls wird in diesem Fall in Abhängigkeit von der Zyklusdauer vorbestimmt.

Ausgehend von einem neuen Zeitmodul wird die anzuwendende Sollimpulsdauer stets automatisch nach folgender Gleichung ermittelt:

$$t_{soll,n.M.} = \frac{t_{soll\,a.M.} \cdot t_{n.M.}}{t_{a.M.}} \qquad (10),$$

wobei

$t_{soll,n.M.}$ die Sollimpulszeit bei neuem Zeitmodul, $t_{soll\,a.M.}$ der Sollimpuls bei ehemals vorgegebenem (alten) Zeitmodul, $t_{n.M.}$ die Zeit des neuen Moduls und $t_{a.M.}$ die Zeit des ehemals vorgegebenen (alten) Moduls bedeuten.

Nähere Ausführungen zu den Berechnungsformeln (1) bis (7) sind im Ausführungsbeispiel angegeben Die Formeln (8) bzw. (9) sind Gegenstand der abhängigen Ansprüche 13 bzw. 14.

Im laufenden Fertigungsbetrieb lassen sich mittels der erfindungsgemäßen Verfahrensweise die Zykluszeiten verkürzen und die Qualität der Formteile verbessern. Außerdem verringert sich die Ausschussquote.

Auf weitere Vorteile der erfindungsgemäßen Verfahrensweise wird im Ausführungsbeispiel eingegangen.

Die Erfindung soll nachstehend an einem Ausführungsbeispiel näher erläutert werden. In der zugehörigen Zeichnung zeigen

Fig. 1    die Schließeinheit einer Spritzgießmaschine mit Steuer- und Regeleinheit in vereinfachter Darstellung,
Fig. 2    das Aufheizmodul als grafische Darstellung und
Fig. 3    das Impulszeitmodul als grafische Darstellung.

Auf einer Spritzgießmaschine vom Typ Krauss Maffei 1300/8100 MX wird das Formteil "Leuchtenträger" aus heißhärtender UP-Formmasse im Spritzprägeverfahren hergestellt. Verfahrenstechnische Parameter:
Werkzeugauslegung: 2-fach, Anguss jeweils zentral über ein Kaltkanalangusssystem mit hydraulischem Kolbenverschlussmechanismus

| Masse eines Schusses: | 2700 g (2 Formteile einschließlich Austrieb) |
| --- | --- |
| Werkzeugmasse: | 8.500 kg (Tauchkantenausführung) |
| Einspritzdruck: | 800 bar in der Formmasse |
| Prägekraft: | 9000 kN |
| Prägehub: | 4 mm |
| Einspritzzeit: | 5,5 sec |
| Heizmedium: | Dampf, Vorlauftemperatur 180 °C |
| Zykluszeit: | 65 sec |
| Zeitmodul (ZM): | 60 sec. |

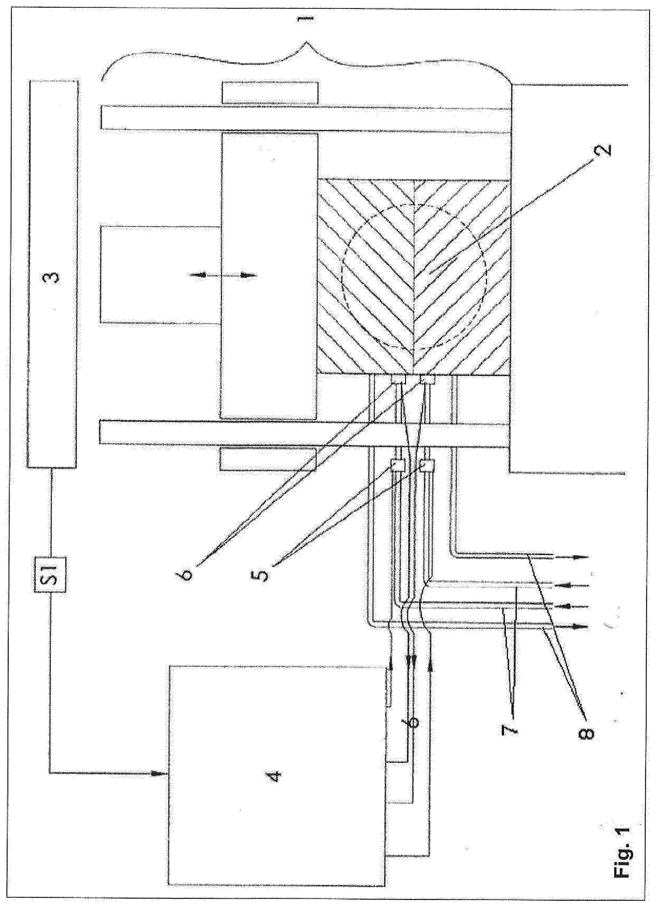

In der Figur 1 ist die Schließeinheit 1 der zum Spritzprägen eingesetzten Spritzgießmaschine in vereinfachter Darstellung gezeigt, wobei das zweiteilige Spritzprägewerkzeug 2 an den Aufspannplatten der Spritzgießmaschine befestigt ist. Als Blockschaltbilder sind die Ablaufsteuerungseinheit 3 für die Spritzgießmaschine und die Regeleinheit 4 für die Regelung der Temperatur des dampfbeheizten Spritzprägewerkzeuges 2 dargestellt. Die Regeleinheit ist mit einem nicht näher gezeigten Rechner, z.B. Computer, verbunden, auf dem die erforderliche Software zur Ausführung von Rechenoperationen und Steuerungssowie Regelungsvorgängen installiert ist.

Das Spritzprägewerkzeug 2 ist mit vier separat regelbaren Heizkreisläufen ausgestattet, von denen in der Fig. 1 jeweils die Vorlauf- und Rücklaufleitungen 7, 8 für die Dampfzufuhr (durch Pfeile angedeutet) der beiden vorderen Heizkreisläufe zu sehen sind. In die Vorlaufleitung 7 ist ein elektrisch betätigbares Magnetventil 5 zum Öffnen und Schließen der Dampfzufuhr eingebunden. Je Heizkreislauf befindet sich in der Dampfzuleitung 7 unmittelbar am Eintritt in das Werkzeug 2 ein über eine kurze metallschlüssige Verbindung zum Werkzeug eingebundener Temperaturfühler 6, der mit der Regeleinheit 4 verbunden ist. Die Regeleinheit 4 ist mit der Ablaufsteuerungseinheit 3 für die Spritzgießmaschine über die Leitung S1 gekoppelt, um ein Signal aus der Ablaufsteuerung der Spritzgießmaschine an die Regeleinheit 4 zu liefern. Für die Regelung der Werkzeugtemperatur wird nur ein einziges Signal aus der Maschinenablaufsteuerung benötigt, wie z.B. "Zeitpunkt Schließen des Werkzeuges".

Der Verfahrensablauf zur Beheizung des Spritzprägewerkzeuges 2 ist in drei Perioden unterteilt, eine erste Periode zur Aufheizung der Spritzprägewerkzeuges auf Betriebstemperatur (Aufheizperiode), eine zweite Periode zur weiteren Regelung der Beheizung des Werkzeuges zur Aufrechterhaltung des stationären Heizzustandes (stationäre Heizperiode) und als dritte Periode, die Fertigungsperiode, dem eigentlichen Spritzprägen der Formteile. Die Aufheizperiode ist nur erforderlich, wenn das Werkzeug erstmalig oder nach einer Unterbrechung der Fertigung erneut wieder in Betrieb genommen wird. Bei kurzzeitigen Störungen während des laufenden Betriebes ist eine erneute Aufheizung nicht erforderlich. Die stationäre Heizperiode beginnt, wenn am Ende einer Einschwenkphase der Soll-/Isttemperaturvergleich für den jeweiligen Heizkreis eine Abweichung kleiner plus/minus 5 °K ergibt. Sie endet frühestens dann, wenn nach einer festgelegten Anzahl von Regelzyklen hintereinander (im Beispiel sind dies 3) in allen Heizkreisläufen des zu beheizenden Systems (Werkzeuges) ein unterer Grenzwert einer Regelabweichung (im Beispiel sind dies plus/minus 2 °K) unterschritten wurde und die Fertigungsperiode dadurch eingeleitet wird, dass bei ansonsten gleichem Regelalgorithmus wie in der stationären Heizphase nun als Startsignal für das Einleiten eines Dampfimpulses ein Signal aus der Ablaufsteuerung der Verarbeitungsmaschine genutzt wird.

Zur Steuer- und Regeleinheit gehören außer dem Rechner bzw. PC noch eine Eingabeeinheit, eine Signaleingangs-, Signalverarbeitungs- und Signalausgangseinheit, sowie eine Anzeigeeinheit und Speichereinheit.

In der Speichereinheit ist ein Heizprofil hinterlegt, das auf Erfahrungen und Kenntnissen aus dem praktischen Betrieb zur Verarbeitung von polymeren Werkstoffen oder Gummi basiert. Zur Definierung der möglichen Aufheizcharakteristika wurde wie folgt vorgegangen:

Aus Aufheizvorgängen zur Verarbeitung von polymeren Werkstoffen oder Gummi ist bekannt, dass ein "träger" Aufheizvorgang bzw. Aufheizcharakter dann vorliegt, wenn bei einer bestimmten Dampfeintrittstemperatur (hier: 180 °C) für das Aufheizen eines durchschnittlichen Formwerkzeuges von 20 °C auf eine mittlere Werkzeugtemperatur von 155 °C eine Aufheizdauer von 120 min und zur Aufrechterhaltung dieser Temperatur eine weitere Dampfzufuhr während einer Zeitdauer von 26 s/min erforderlich ist.

Ein "sehr schneller" Aufheizvorgang bzw. Aufheizcharakter liegt dann vor, wenn die Aufheizdauer (von 20 auf 155 °C) nur 5 min beträgt und die Dauer der Dampfzufuhr zur Aufrechterhaltung der Temperatur nur 8,8 s/min.

Ausgehend von dieser Prämisse wurden für die Module "Aufheizen", "Einschwenken" und "Impulszeit" eine untere Kennlinie als Aufheizcharakter "träge" und eine obere Kennlinie als Aufheizcharakter "sehr schnell" erstellt, wobei zwischen diesen beiden Grenzlinien das praktisch in Frage kommende Arbeitsfeld liegt. Zwischen diesen beiden Kennlinien wurden in gleichem Abstand zueinander weitere identisch verlaufende Kennlinien als Aufheizcharakteristika "schnell", "normal" und "langsam" eingetragen. Die diesen Kennlinien zuzuordnenden Zahlenwerte, Aufheizzeiten bei unterschiedlichen Solltemperaturen, als sogenanntes Aufheizmodul AM, Einschwenkdauer bei unterschiedlichen Solltemperaturen, als sogenanntes Einschwenkmodul EM, und Dampfimpulszeiten bei unterschiedlichen Solltemperaturen, als sogenanntes Impulszeitmodul IZM, sind als Datenbank auf dem Speicher entweder in grafischer und/oder tabellarischer Form erfasst, bezogen auf eine ganz bestimmte Dampftemperatur (hier: 180 °C). Die hierzu vorliegenden und abgespeicherten Zahlenwerte bilden die Grundlage für die während des Betriebes automatisch erfolgenden Rechenoperationen zur Bestimmung des Regelverhaltens, wobei durch die abgespeicherten Module das gesamte praktisch mögliche thermische Verhalten von Werkzeugkreisläufen erfasst ist.

Das Einschwenkmodul umfasst eine oder mehrere Einschwenkphasen, deren Zeitdauer unterschiedlich berechnet werden, wobei ggf. auch mehrere Einschwenkphasen hintereinander eingeleitet werden können.

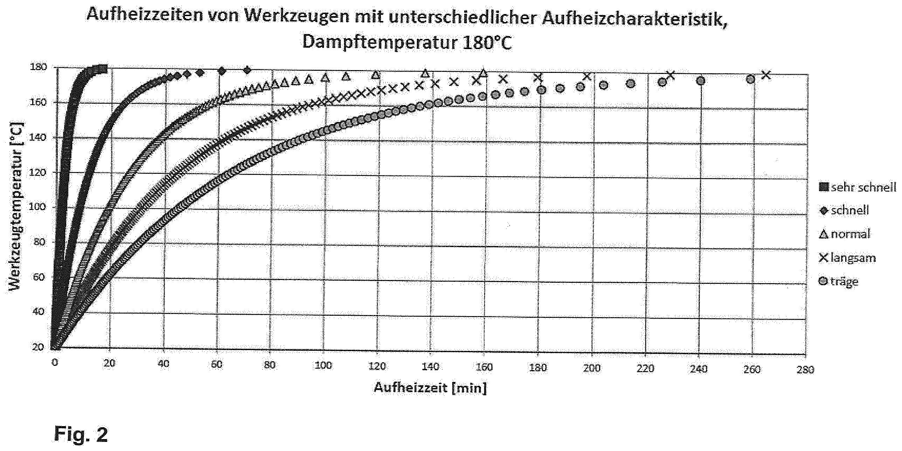

Die im jeweiligen Anwendungsfall heranzuziehende Kategorie des Aufheizcharakters für einen Heizkreislauf wird in der Regel aufgrund von Erfahrungswerten vom Bediener festgelegt und kann gegebenenfalls während des Regelungsvorganges automatisch in eine andere Kategorie überspringen sofern sich die erste Eingabe als zu ungenau erweist. Das Aufheizmodul (siehe Fig. 2 und Tabelle 1) beinhaltet das Arbeitsfeld hinsichtlich des Zusammenhanges zwischen Dampftemperatur, Aufheizdauer und Solltemperatur. Der mathematische Zusammenhang dieser Grundbeziehungen basiert z.B. auf einer Exponentialfunktion, wobei der Aufheizcharakter durch den Betrag des Exponenten bestimmt ist.

Das Einschwenkmodul EM (siehe Tabellen 2 und 3) beinhaltet das Arbeitsfeld hinsichtlich des Zusammenhanges zwischen Einschwenkdauer, Aufheizcharakter und Solltemperatur, basierend auf einer spezifischen Form einer Potentialfunktion mit reziprokem Exponenten oder auf einer logarithmischen Beziehung.

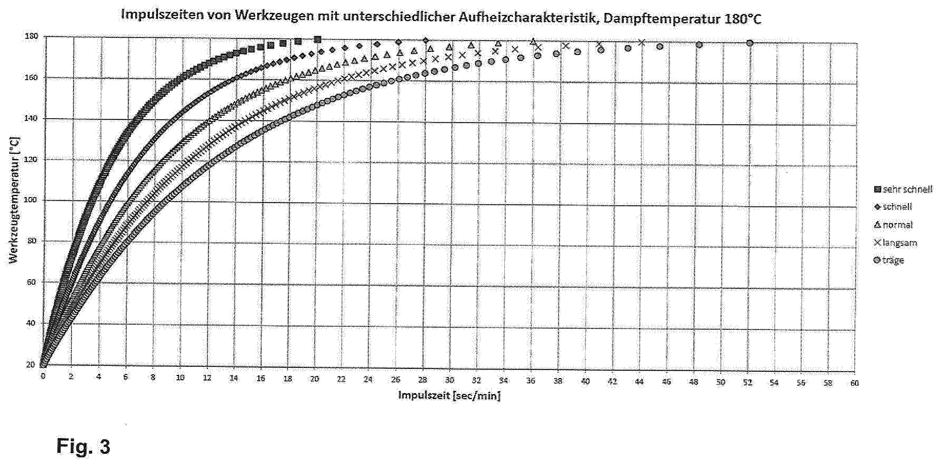

Das Impulszeitmodul IZM (siehe Fig. 3 und Tabelle 4) beinhaltet das Arbeitsfeld hinsichtlich des Zusammenhanges zwischen Aufheizcharakter, Solltemperatur und Sollimpulszeit, unter der Annahme eines stationären Betriebszustandes. Die Tabellen 1 bis 4 sind am Ende der Beschreibung angegeben.

Das Impulszeitmodul basiert auf einer spezifischen Form einer Potentialfunktion, wobei Solltemperatur und Aufheizcharakter Variable sind. Die Berechnung kann auch nach einer logarithmischen Beziehung erfolgen.

Regelgröße des Verfahrens ist eine Temperatur, deren Messort nahe an der Eintrittsstelle des Dampfes in das Werkzeug angeordnet ist und gleichzeitig über eine kurzes, metallisches Anschlussstück mit eingebundenem Temperaturfühler auch thermische Informationen zum peripheren Temperaturzustand des Werkzeuges gestattet.

Praktische Erfahrungen haben gezeigt, dass die Temperatur an diesem Messort, je näher sich der Temperaturzustand des Werkzeuges beim Aufheizen dem stationären Zustand nähert, sich zunehmend dem Temperaturzustand angleicht, der in der geometrischen Mitte eines Heizkreises im Werkzeug gemessen wird. Im stationären Zustand liegt die Messstellentemperatur dann, je nach thermischen und geometrischen Gegebenheiten stets zwischen 2 bis 5 °K über der mittleren Werkzeugtemperatur und zeigt Veränderungen des mittleren Werkzeugtemperaturzustandes zwar verzögert, aber sicher an. Die regelungstechnische Nutzung dieses Temperatursignals ist damit zwar aufwendig , aber der Vorteil der Messanordnung, dass keine Messfühler mit Sonderaufwand im Werkzeug pro Kreis platziert, gepflegt und evtl. repariert werden müssen, spricht für die deutlich höhere verfahrenstechnische Anwendungsfreundlichkeit dieser Lösung.

Stellgröße des Verfahrens ist die zeitliche Dauer des Dampfvolumenstromes, der mittels entsprechender Stellorgane, z.B. Magnetventile oder Motorstellventile, zeitmoduliert über die jeweilige Vorlaufleitung zugeführt wird.

In der Rücklaufleitung ist ein Kondensatabflussventil eingebunden, über das sich bildendes Kondensat abgeführt wird.

## I. Aufheizperiode

Gemäß vorliegendem Beispiel sind für die beiden Heizkreisläufe I und II der Düsenseite des Werkzeuges eine Solltemperatur von 165 °C und für die beiden Heizkreisläufe III und IV der Fahrseite eine Solltemperatur von 155 °C vorgegeben.

Auf der Grundlage technologischer Erfahrungen und Kenntnissen der Werkzeugkonstruktion bzgl. der geometrischen Auslegung der einzelnen Heizkreisläufe werden vom Bediener für beide Heizkreise der Düsenseite der Aufheizcharakter "schnell" und für die Heizkreisläufe der Fahrseite der Aufheizcharakter "langsam" zu vorgenannten Solltemperaturen ausgewählt und eingegeben.

Durch Auslösen der Startfunktion beginnt die Aufheizperiode, wobei die Magnetventile 5 geöffnet werden und 100% des verfügbaren Dampfvolumenstromes durch die Kanäle der Heizkreise I bis IV strömen. Während der Aufheizphase sollte das Werkzeug geschlossen sein, um unnötige Wärmeverluste zu vermeiden.

Die kontinuierliche Dampfzuführung in der Aufheizperiode wird dann beendet, wenn gemäß Aufheizmodul (siehe Fig. 2 und Tabelle 1) eine Isttemperatur erreicht sein müsste, die um einen bestimmten Betrag X (5, 10 oder 15 °C), unterhalb der Solltemperatur liegt. Jedem Aufheizcharakter ist ein bestimmter Betrag X zugeordnet, wie nachfolgend angegeben, wobei die Werte als Bestandteil des Heizprofils im Arbeitsspeicher hinterlegt sind:

| Aufheizcharakter | sehr schnell | schnell | normal | langsam | träge |
|---|---|---|---|---|---|
| Betrag X °K | 15 | 10 | 10 | 10 | 5 |

Die Bedingungen für die Aufheizphase des Werkzeuges sind in der nachfolgenden Tabelle angegeben.

| | Heizkreisläufe | |
|---|---|---|
| | Düsenseite (I und II) | Fahrseite (III und IV) |
| Solltemperatur °C | 165 | 155 |
| Aufheizcharakter | schnell | langsam |
| Aufheizzeit bis zur Solltemperatur in min gemäß Aufheizmodul | 28,4 | 83,5 |
| Betrag X °C | 10 | 10 |
| tatsächliche Aufheizzeit | 22,3 | 68,4 |

Nach Ablauf der tatsächlichen Aufheizzeit gemäß vorstehender Tabelle endet die kontinuierliche Dampfzufuhr für jeden der vier Heizkreisläufe und es wird automatisch für jeden Heizkreislauf eine Einschwenkphase $\tau_1$ generiert, um die unterhalb der Solltemperatur liegende Isttemperatur durch eine energetisch feinfühlig dosierte Wärmezufuhr an die gewünschte Solltemperatur heranzuführen.

Dies ist auch eine Voraussetzung, um in der stationären Betriebsperiode möglichst schnell eine regelungstechnisch stabile Arbeitsweise zu erreichen.

Die erste Einschwenkphase $\tau_1$ ist durch einen minutenmodulierten sich degressiv verkürzenden Dampfimpulsbetrieb charakterisiert.

Die Dauer der Einschwenkphase ist abhängig von dem gewählten Aufheizcharakter und der Höhe der gewünschten Solltemperatur. Sie wird automatisch aus dem im Speicher der Regeleinheit hinterlegten ersten Einschwenkmodul (siehe Tabelle 2) generiert. Bezogen auf das vorliegende Beispiel ergibt sich für die beiden Kreisläufe der Düsenseite eine Einschwenkdauer $\tau_1$ von jeweils 18 min und für die Kreisläufe der Düsenseite von 20 min. In diesem Zusammenhang ist am Ende der ersten Einschwenkphase $\tau_1$ als weiterer Parameter die Sollimpulsdauer $t_{soll}$ von Bedeutung. Die Sollimpulsdauer $t_{soll}$ ist identisch mit der Impulsdauer, die bei minutenmoduliertem Dampfimpulsbetrieb erforderlich ist, um im stationären Betriebszustand bei einer konkreten Solltemperatur und dem jeweils spezifischen Aufheizcharakter den stationären Betriebszustand auf dem gleichbleibend hohen Temperaturniveau exakt einzuhalten. Diese Sollimpulsdauer $t_{soll}$ ist ebenfalls abhängig von dem Aufheizcharakter des jeweiligen Heizkreislaufes und der Höhe der gewünschten Solltemperatur. Sie wird ebenfalls aus dem im Speicher der Regeleinheit hinterlegten "Impulszeitmodul IZM" generiert.

Bezogen auf das vorliegende Beispiel wird aus dem Impulszeitmodul IZM (siehe Fig. 3 und Tabelle 4) eine Impulsdauer $t_{soll}$ für die beiden düsenseitigen Kreisläufe von 15,4 s/min und für die beiden fahrseitigen Kreisläufe von 21,1 s/min ermittelt. Die Berechnung der tatsächlich auszulösenden Impulsdauer für die einzelnen Kreisläufe in der ersten Einschwenkphase erfolgt für die jeweilige Minute nach Gleichung (1), wobei als Zeitmodul (ZM) im vorliegenden Beispiel 60 Sekunden gewählt wurde:

$$(1) \quad t = ZM - \frac{(ZM - t_{soll})}{\tau} \cdot \tau^*,$$

wobei

$t$ = Impulsdauer zum jeweiligen Istzeitpunkt

$t_{soll}$ = Sollimpulsdauer in s/min gemäß Impulszeitmodul IZM

$\tau^*$ = aktuelle Bezugszeit ab Beginn Einschwenkphase in min; (beginnt mit 1)

bedeuten.

Da nur im Idealfall davon auszugehen ist, dass mit der vom Bediener vorgenommenen Wahl des heizkreiskonkreten Aufheizcharakters das thermodynamisch wirklich zutreffende Aufheizverhalten getroffen wird, erfolgt in der letzten Minute der ersten Einschwenkphase eine erste Anpassung an eventuelle thermodynamische Abweichungen. Dazu wird zu Beginn der letzten Minute erstmalig ein Vergleich der Isttemperatur mit der Solltemperatur wie folgt vorgenommen:

a) Ist die Isttemperatur >2 °K unter der Solltemperatur, so erfolgt in der letzten Minute der Einschschwenkphase eine Impulsverlängerung um einen Faktor zwischen 1,5 bis 3., im vorliegenden Beispiel wurde der Faktor 2 gewählt;
b) Ist die Isttemperatur >8 °K über der Solltemperatur, so wird auf den Impuls der letzten Minute verzichtet.

Bei allen anderen zu Beginn der letzten Minute der Einschwenkphase ermittelten Abweichungen außer a) oder b) erfolgt keine Korrektur der Dampfimpulsdauer, d.h. es wird gemäß Gleichung (1) oder Gleichung (3) die Sollimpulsdauer ausgelöst.

In der nachfolgenden Tabelle sind die Ausgangswerte und die vorgenommenen Anpassungen bzw. Veränderungen der Sollimpulsdauer innerhalb der letzten Minute der ersten Einschwenkdauer angegeben:

| | Heizkreisläufe | | | |
|---|---|---|---|---|
| | I | II | III | IV |
| Solltemperatur °C | 165 | 165 | 155 | 155 |
| Sollimpulsdauer s/min | 15,4 | 15,4 | 21,1 | 21,1 |
| Isttemperatur zu Beginn der letzten Minute °C | 156 | 175 | 129 | 173 |
| Vorgenommene Anpassung der Sollimpulsdauer in der letzten Minute auf s/min | 30,8 | 0 | 42,2 | 0 |

Am Ende der ersten Einschwenkphase wird ein zweiter Vergleich der thermischen Istsituation mit dem Sollzustand vorgenommen. Für die Heizkreisläufe I bis IV wurden folgende Isttemperaturen gemessen:

| | Heizkreisläufe | | | |
|---|---|---|---|---|
| | I | II | III | IV |
| Solltemperatur °C | 165 | 165 | 155 | 155 |
| Isttemperatur °C | 158 | 172 | 131 | 171 |

Wie bereits erwähnt, werden bei Abweichungen der Isttemperaturen von den Solltemperaturen nach Beendigung der ersten Einschwenkphase für die betreffenden Heizkreise Korrekturphasen durchgeführt, um die Isttemperaturen an die Solltemperaturen anzugleichen. Für die einzelnen Heizkreisläufe I bis IV werden regelungstechnisch folgende Korrekturmaßnahmen vorgenommen:

**Heizkreislauf I** (um 7 °C zu niedrige Isttemperatur):

Aus dem Aufheizmodul wird automatisch eine Nachheizzeit in Minuten ermittelt und ausgelöst, deren Zeitdauer in der Weise abgeleitet wird, das die Differenz zwischen der Aufheizzeit bei der gewählten Solltemperatur und der Aufheizzeit bei der gemessenen Ist-temperatur gebildet und mit einem Dämpfungsfaktor zwischen 0,5 und 0,9 multipliziert wird. Im Praxisbeispiel wurde als Dämpfungsfaktor 0,5 gewählt womit sich eine Nachheizzeit von ((28,4 - 23,8) x 0,5 = 2,3 min) 2,3 min ergab.

Nachfolgend wird eine zweite Einschwenkphase gemäß Gleichung 1 eingeleitet, wobei von einem zweiten Einschwenkmodul ausgegangen wird, dessen Werte für die Einschwenkdauer im Vergleich zu der ersten Einschwenkmatrix um ca. 50% reduziert sind. Im vorliegenden Beispiel ergab sich bei der Solltemperatur von 165 °C eine zweite Einschwenkdauer $\tau_2$ von 9 min (Tabelle 3).

Zu Beginn der letzten Minute der zweiten Einschwenkphase wird analog wie bei der ersten Einschwenkphase wieder ein Soll-/Ist-Vergleich durchgeführt, der bei den beschriebenen Überschreitungen von Abweichungsgrenzen die bereits im Rahmen der ersten Einschwenkdauer aufgezeigten thermodynamische Stellmaßnahmen auslöst.

Am Ende der zweiten Einschwenkphase wird nochmals ein Soll-/Ist-Vergleich durchgeführt. Sind die Abweichungen kleiner als plus/minus 5 °K, erfolgt der Übergang in die Regelungsphase. Nach der Nachheiz- und zweiten Einschwenkphase wurde eine Isttemperatur von 163,5 °C gemessen. Für diesen Heizkreislauf I erfolgt nunmehr die Regelung der Werkzeugtemperatur nach den Bedingungen für die stationäre Heizperiode.

**Heizkreislauf II** (um 7 °C zu hohe Isttemperatur):

Bei zu hohen Isttemperaturen (>5 °K bis <15 °K) wird zunächst eine Heizpause eingelegt, also die Dampfzufuhr unterbrochen. Die Dauer der erforderlichen Unterbrechung bzw. Pause wird automatisch wie folgt aus dem Aufheizmodul (Kategorie "schnell") ermittelt:

| Isttemperatur: | 172 °C | Aufheizdauer: | 35,9 min |
|---|---|---|---|
| Solltemperatur | 165 °C | Aufheizdauer | 28,4 min |
| | | Differenz: | 7,5 min |

Multipliziert mit dem Dämpfungsfaktor 0,75 ergibt sich eine Pausenzeit von 5,6 min. Nach Beendigung der Pausenzeit beginnt eine Einschwenkphase mit progressiv, pro Minute zunehmenden Dampfimpulsen (Einschwenken von oben), um einen energetisch feinfühligen, schwingungsarmen Übergang in die Regelungsphase vorzubereiten. Die Berechnung der Impulszeit/min für die progressive Einschwenkphase erfolgt nach folgender Gleichung (3):

$$(3) \quad t = \frac{t_{soll}}{\tau} \cdot \tau^*,$$

wobei

$t =$      Impulsdauer in s/min zum jeweiligen Istzeitpunkt,

$t_{soll} =$      Sollimpulslänge in s/min bei Solltemperatur gemäß Impulszeitmodul,

$\tau^* =$      aktuelle Bezugszeit ab Beginn Einschwenkphase; in 1. Minute mit 1,

$\tau =$      Dauer der Einschwenkphase (Einschwenkdauer)

bedeuten.

Im vorliegenden Beispiel wurde die progressiv pro Minute mit zunehmenden Impulsen gekennzeichnete Einschwenkdauer mit 10 min festgelegt.

Eigene praktische Untersuchungen ergaben, dass bei der Festlegung der Einschwenkdauer und des Dämpfungsfaktors der progressiven Einschwenkphase eine zwischen beiden Größen bestehende Korrelation in der Weise zu beachten ist, dass mit größer gewähltem Dämpfungsfaktor die Einschwenkdauer kleiner zu bemessen ist. Um einen energetisch feinfühligen, schwingungsarmen Übergang in die Regelungsphase abzusichern, sollte eine minimale Einschwenkdauer jedoch nicht unterschritten werden. Empfohlener Zeitdauerbereich für die Einschwenkdauer ist >5 <15min und für den Dämpfungsfaktor der Wertebereich von 0,5 bis 0,9.

Am Ende dieser Einschwenkphase wurde eine Isttemperatur von 166,5 °C gemessen und damit auch für den Kreislauf II der Düsenseite die Regelungsphase für die stationäre Betriebsperiode eingeleitet. In der letzten Minute dieser zweiten Einschwenkphase wurde analog der bereits beschriebenen Art ein Soll-/Ist-Vergleich der Temperatur vorgenommen, bei dem bei Feststellung von Abweichungen der ebenfalls beschriebenen größeren Art, entsprechende thermodynamische Stellmaßnahmen ausgelöst werden.

**Heizkreislauf III** (um 24 °C zu niedrige Isttemperatur):

Am Ende der Einschwenkphase wurde eine Isttemperatur von 131 °C gemessen. Da diese um mehr als 15 °K niedriger als die Solltemperatur ist, wechselt das Regelverhalten automatisch in die benachbarte Kategorie mit einer längeren Aufheizdauer, also von "langsam" zu "träge", wobei als erstes eine "Nachheizzeit" ($t_N$) ausgelöst wird, deren zeitliche Dauer wie folgt berechnet wird:

a) Ermittlung des Zeitwertes der Kategorie "träge" der sich bei der vorhandenen Isttemperatur ergibt = $t_A$ ist
b) Ermittlung des Zeitwertes in der Kategorie "träge" der sich bei der Solltemperatur ergibt = $t_A$ soll
c) Ermittlung der zweiten Einschwenkdauer $\tau_2$ (Kategorie "träge") bei Solltemperatur. Gleichung (2):

$$(2) \quad t_N = \left(t_{A_{soll}} - \tau_2\right) - t_{A_{ist}},$$

wobei

$t_N$ = Nachheizzeit
$t_{A_{soll}}$ = Aufheizzeit bei Solltemperatur und neuer Aufheizcharakteristik
$t_{A_{ist}}$ = Aufheizzeit bei Isttemperatur und neuer Aufheizcharakteristik
$\tau_2$ = Einschwenkdauer gemäß zweiter Einschwenkmatrix bei neuer Aufheizcharakteristik und Solltemperatur

bedeuten.

Gemäß Tabelle 1 ergeben sich folgende Werte:
Für $t_A$ ist ergibt sich bei 131 °C:      76,90 min
Für $t_{A\ soll}$ ergibt sich bei 155 °C:      120,70 min
Gemäß Tabelle 3 ergibt sich:
Für $\tau_2$ ergibt sich bei 155 °C:      13,00 min

Daraus berechnet sich eine Nachheizzeit von: (120,7 - 13) - 76,9 = 30,8 min.

Nach Ablauf der Nachheizzeit schließt sich eine zweite Einschwenkphase mit sich über die Einschwenkzeit degressiv gemäß Gleichung (1) pro Minute verkürzenden Impulsen an.

Dabei wird der Wert für die Sollimpulszeit aus der Tabelle 4 "Impulszeitmodul" herangezogen (bei 155 °C, Kategorie "träge", $t_{soll}$ = 26,4 s).

Am Ende der letzten Minute der zweiten Einschwenkphase wird ein weiterer Soll-/Ist-Temperaturvergleich durchgeführt. Dieser ergab eine Isttemperatur von 153 °C, die nur noch um 2 °C von der Solltemperatur abweicht, sodass nun auch für diesen Heizkreislauf III die Regelungsphase für die stationäre Heizperiode eingeleitet wird.

**Heizkreislauf IV** (um 16 °C zu hohe Isttemperatur):

Am Ende der Einschwenkphase wurde eine Isttemperatur von 171 °C gemessen. Da diese um mehr als 15 °K höher als die Solltemperatur, wechselt das Regelverhalten automatisch in die benachbarte Kategorie mit einer kürzeren Aufheizdauer, also von "langsam" zu "normal", wobei als erstes eine "Heizpause" ausgelöst wird, um die Isttemperatur zu verringern. Die zeitliche Dauer der erforderlichen Heizpause wird aus der Differenz $t_{A\ langsam}$ minus $t_{A\ normal}$, multipliziert mit einem Dämpfungsfaktor K (zwischen 0,5 und 0,9) ermittelt.

$t_{A\ träge}$      ist die Aufheizzeit bei Solltemperatur gemäß der ursprünglich gewählten Kategorie "träge"
$t_{A\ normal}$      ist die Aufheizzeit bei Solltemperatur gemäß der neu gewählten Kategorie °C "normal"
$t_{A\ träge}$ (bei 155 °):      83,5 min
$t_{A\ normal}$ (155 °C):      50,1 min

Für K wurde = 0,5 gewählt, wodurch sich eine Pausenzeit von 16,7 min ergibt.

Mit Beendigung der Pausenzeit beginnt analog wie bereits zu Heizkreislauf II erläutert, eine zweite Einschwenkphase mit progressiv, pro Minute zunehmenden Impulszeiten. Die zeitliche Dauer dieser Einschwenkphase beträgt ebenfalls 10 min und die Berechnung der zeitlichen Dauer der pro Minute auszulösenden Impulse erfolgt ebenfalls gemäß Gleichung (3).

Für $t_{soll}$ wird hierbei aus dem Impulszeitmodul die Zeit ausgewählt, die sich bei Solltemperatur für die neu gewählte Kategorie "normal" ergibt.

$t_{soll}$ (bei 155 °C):      15,9 s

Die Zeitdauer wird über die installierte Berechnungssoftware automatisch ermittelt und ausgelöst.

Am Ende der letzten Minute dieser Einschwenkphase findet ein weiterer Soll-/Ist-Temperaturvergleich statt, wobei eine Isttemperatur von 157 °C gemessen wurde, die lediglich um 2 °C von der Solltemperatur abweicht, so dass nun auch für diesen Heizkreislauf IV die Regelungsphase für die stationäre Heizperiode eingeleitet wird.

## II. Stationäre Heizperiode

Die Regelung der Temperatur der einzelnen Heizkreisläufe I bis IV erfolgt nach Beendigung der jeweiligen Aufheizphase mittels Einleitung zeitmodulierter intermittierender Dampfimpulse (Dampftemperatur 180 °C).

Als Zeiteinheit wurde im vorliegenden Beispiel 1 Minute gewählt, d.h., pro Minute wird ein zeitlich in seiner Dauer exakt so vorbestimmter Dampfimpuls ausgelöst, dass die Temperatur am Messort auf dem gewünschten Solltemperaturniveau gehalten wird.

Für die Regelung wird stets der Mittelwert der Temperatur, die vom Beginn eines Heizimpulses über 40 bis 90%, vorzugsweise 75%, der auszulösenden Impulslänge gemessen wird, herangezogen. Hierfür wird der Begriff Messzeit verwendet. Damit wird abgesichert, dass regelungstechnisch bei thermodynamischen Störungen noch im gleichen Regelungszyklus sowohl Impulszeitverlängerungen als auch Impulszeitverkürzungen von bis zu 25% an dem aktuellen Dampfimpuls vorgenommen werden können.

Die Arbeitsweise der vorgeschlagenen Regelung ist so konzipiert, dass die Bedingung:

$$\int_{t_0}^{t_{75}} \vartheta_{ist}(dt) - \int_{t_0}^{t_{75}} \vartheta_{soll}(dt) = \Delta$$

beziehungsweise in arithmetischer Betrachtungsweise

$$\frac{\vartheta_{ist}(t_{75}) - \vartheta_{ist}(t_0)}{2} + \vartheta_{ist}(t_0) - \vartheta_{soll} = \Delta$$

mit $\Delta = 0$ erfüllt wird, dabei bedeuten:

$t_0$ = Zeitpunkt des Impulsbeginns,
$t_{75}$ = Zeitpunkt an dem 75% der Impulszeit abgelaufen ist,
$\vartheta_{soll}$ = gewünschte Solltemperatur,
$\vartheta_{ist}$ = gemessene Isttemperatur,
$\vartheta_{ist}(t_0)$ = die zu Impulsbeginn gemessene Isttemperatur und
$\vartheta_{ist}(t_{75})$ = die gemessene Temperatur zum Zeitpunkt an dem 75% der Impulszeit abgelaufen ist.

In Abhängigkeit von der ermittelten Temperaturdifferenz $\Delta\vartheta$ zwischen dem Mittelwert der Isttemperatur und der Solltemperatur erfolgt unmittelbar nach dem Impulszeitpunkt $t_{75}$ die Berechnung einer Korrektur der Sollimpulszeit dann, wenn bedingt durch das Wirken thermodynamischer Störungen die o. g. Bedingung nicht eingehalten wird. Der Berechnungsalgorithmus hierfür ist folgender:

$$(4) \quad t_{Korr} = t_{soll} \pm t_{soll} \cdot K,$$

wobei

$t_{Korr}$ = korrigierte Impulsdauer

$t_{soll}$ = Sollimpulsdauer gemäß Impulszeitmodul

$K$ = Korrekturfaktor

bedeuten.

Der Korrekturfaktor K wird mittels spezieller mathematischer Beziehungen in Abhängigkeit von der jeweils gemessenen Temperaturdifferenz $\Delta\vartheta$ berechnet und die sich, bei positiver Temperaturdifferenz aus der Differenzenform und bei negativer Temperaturdifferenz aus der Summenform von Gleichung (4) ergebende korrigierte Impulslänge noch in der aktuellen Minute in der Weise wirksam gemacht, dass die Impulszeit gegenüber der Sollimpulszeit verkürzt oder verlängert wird.

Die Regelung wird nachfolgend für die einzelnen Heizkreisläufe I bis IV detailliert erläutert Die Regelung für die stationäre Betriebsperiode beginnt bereits unmittelbar nach Beendigung der Aufheizperiode für den betreffenden Heizkreislauf, also dann wenn die Einschwenkphase beendet und die Abweichungen zur vorgegebenen Solltemperatur kleiner als plus/minus 5 °K sind.

**Heizkreislauf I**

Die gemessene Isttemperatur am Ende der Einschwenkphase beträgt 163,5 °C. Während des ersten Dampfimpulses wird zu Impulsbeginn (Zeitpunkt $t_0$) eine Temperatur von 163,5 °C und zum Zeitpunkt $t_{(75)}$ eine Temperatur von 165,3 °C gemessen. Daraus ergibt sich ein Mittelwert von 164,2 °C und damit ein $\Delta\vartheta$ von -0,8 °K, d.h., die Solltemperatur wird um 0,8 °C unterschritten (das Vorzeichen ist minus).

Regelungstechnisch wird noch im gleichen Minutensegment mit einer Impulszeitanpassung korrigierend wie folgt eingegriffen:

In Gleichung (4) wurde für die Berechnung des Korrekturfaktors die Beziehung $K = \frac{-3+6|\Delta\vartheta|}{100}$ eingefügt.

Gemäß Gleichung (4) ergibt sich

$$t_{Korr} = t_{soll} + t_{soll} \cdot \left(\frac{-3+6|\Delta\vartheta|}{100}\right) \qquad \text{für neg. } \Delta\vartheta$$

und

$$t_{Korr} = t_{soll} - t_{soll} \cdot \left(\frac{-3+6|\Delta\vartheta|}{100}\right) \qquad \text{für pos. } \Delta\vartheta$$

Der Wert für $t_{soll}$ (= 15,4) ergibt sich aus dem Impulszeitmodul, Aufheizcharakter "schnell", Solltemperatur 165 °C.

Durch Einsetzen o. g. Werte ergibt sich für $t_{korr}$ = 15,4 + 0,28 = 15,68 s, d.h. zur Kompensation der Temperaturabweichung von -0,8 °C wird die Zeitdauer des aktuellen Dampfimpulses sofort um 0,28 s, von 15,4 s auf 15,68 s, verlängert.

In der nachfolgenden Minute wird nur noch ein Temperaturunterschied $\Delta\vartheta$ von 0,6 °C ermittelt. Regelungstechnisch wird mit einer Impulsverlängerung um 0,09 s, von 15,4 auf 15,49, korrigierend eingegriffen. In der darauffolgenden Minute wird so gut wie kein Temperaturunterschied ermittelt ($\Delta\vartheta < 0,5°K$) und demzufolge keine weitere Korrektur vorgenommen, da vorgegeben ist, dass nur auf Temperaturabweichungen > 0,5 °K regelungstechnisch reagiert werden soll.

**Heizkreislauf II**

Während des ersten Dampfimpulses wird zu Impulsbeginn (Zeitpunkt $t_o$) eine Temperatur von 166,5 °C und zum Zeitpunkt $t_{(75)}$ eine Temperatur von 168,5 °C gemessen.

Es ergibt sich ein Mittelwert von 167,5 und daraus wiederum sich eine mittlere Temperaturabweichung $\Delta\vartheta$ von +2,5 °C.

Die gemäß Gleichung (4) durchgeführte Berechnung ergibt eine Impulszeitkorrektur um -1,85 s, von 15,4 s auf 13,55 s.

Der Ist-Sollvergleich der Temperatur zum Zeitpunkt $t_{75}$ des zweiten Impulses ergab eine Abweichung $\Delta\vartheta$ von +1,4 °C, die zu einer automatischen Impulszeitverkürzung um -0,83 s, von 15,4 auf 14,57 s führte.

Um vor allem das zeitlich verzögerte thermische Ausgleichsverhalten während der einzelnen Spritzzyklen mit einzubeziehen wurde nun für die Bemessung der Sollimpulslänge der Folgeimpulse eine Regelung eingeführt, die immer dann angewendet wird, wenn beim zweiten Impuls nach Beginn der Regelungsphase immer noch eine Temperaturabweichung >0,5 °K ermittelt wird. Es handelt sich um eine "gleitende" Anpassung der Sollimpulslänge für alle Folgeimpulse bei denen Abweichungen zwischen Ist- und Solltemperatur mindestens 0,5 °K betragen.

Die Berechnung dieser angepassten neuen Impulsdauer $t_{soll\,neu}$ erfolgt nach folgender Beziehung:

$$(5) \quad t_{soll\ neu} = t_{soll} \pm t_{soll} \cdot \alpha \cdot K,$$

wobei

$t_{soll\ neu}$ = neue Sollimpulsdauer

$t_{soll}$ = Sollimpulsdauer gemäß Impulszeitmodul

$K$ = Korrekturfaktor

$\alpha$ = Dämpfungsfaktor

bedeuten.

Bei positiver Temperaturdifferenz wird die Differenzenform und bei negativer Temperaturdifferenz die Summenform von Gleichung (5) angewendet.

Für den Korrekturfaktor K wird immer der Betrag, der bei der Berechnung des letzten Regelimpulses ermittelt wurde, herangezogen. Für den Dämpfungsfaktor $\alpha$ haben sich Werte zwischen 0,3 und 1 bewährt. Im Beispielfall wurde für alle Kreisläufe $\alpha$ = 0,5 gewählt. Außerdem erfolgt eine Neuberechnung von $t_{soll}$ stets dann, wenn im Zyklus, der der jeweiligen Neuberechnung zugrunde liegt, gegenüber dem Vorläuferzyklus das Vorzeichen der Regelabweichung gleich geblieben ist, wie dies hier der Fall ist (wobei K = 0,054).

$$t_{soll\ neu} = 15{,}4 - (15{,}4 \times 0{,}5 \times 0{,}054) = 14{,}98\ s$$

Der dritte Dampfimpuls wird nun mit dem neu berechneten Wert $t_{soll\ neu}$ ausgelöst, über eine Zeitdauer von 14,98 s. Die Temperaturmessung unmittelbar nach Beendigung dieser Dampfimpulsdauer ergab eine Unterschreitung der Solltemperatur um 0,4 °K, sodass keine weitere Korrektur der Dampfimpulsdauer erforderlich ist.

Das Verfahren zur "gleitenden" Anpassung der Sollimpulslänge hat auch das Ziel, die

Impulslänge zu ermitteln, bei der im stationären Betrieb, ohne fortlaufende Impulszeitkorrekturen, die Solltemperatur exakt eingehalten wird. Im Arbeitsfeld zwischen Aufheizcharakter (thermischer Heizkreiskennlinie) und Solltemperatur ist dies immer nur ein konkreter Punkt, der nur zufällig auf der Linie des gewählten Aufheizcharakters liegt. Die Kenntnis dieses Arbeitspunktes ist wichtig, weil die mathematisch beschriebenen Kenndaten des Arbeitspunktes, d.h. die Koordinaten im Arbeitsfeld, bei Neuanfahren eines Prozesses, verbunden mit einer neuen Aufheizphase, Einschwenken u. a. sich das effektive Regelverhalten schneller einstellt. Deshalb werden die Koordinaten des thermischen Arbeitspunktes, aus denen auch sicher das thermische Kennlinienverhalten des jeweiligen Heizkreises abgeleitet werden kann, nach deren ersten Ermittlung im Speicher der Regeleinheit zugrifffähig abgelegt.

## Heizkreislauf III

Die minutenmodulierte intermittierende Regelungsphase für die stationäre Betriebsperiode wird nach Beendigung der zweiten Einschwenkphase eingeleitet.

Gemäß Impulszeitmodul beträgt die Sollimpulszeit $t_{soll}$ 26,4 s/min (Aufheizcharakter "träge"). Während des ersten Dampfimpulses wurde zum Zeitpunkt $t_0$ eine Temperatur von 153 °C und zum Zeitpunkt $t_{75}$ von 154,6 °C gemessen. Daraus ergibt sich ein Mittelwert von 153,8 °C und damit ein $\Delta\vartheta$ von -1,2 °K.

Regelungstechnisch erfolgt noch im gleichen Minutensegment eine Impulszeitanpassung nach folgender Berechnungsmethode:

In Gleichung (4) wurde für die Berechnung der korrigierten Impulszeit für den Faktor K folgende Beziehung eingesetzt:

$$K = \frac{\Delta\vartheta^2}{100}$$

und folgende geänderte Gleichungen (4) für positive bzw. negative Abweichung erhalten:

$$t_{Korr} = t_{soll} + t_{soll} \cdot \left(\frac{\Delta\vartheta^2}{100}\right) \text{ für neg. } \Delta\vartheta$$

und

$$t_{Korr} = t_{soll} - t_{soll} \cdot \left(\frac{\Delta\vartheta^2}{100}\right) \text{ für pos. } \Delta\vartheta$$

Durch Einsetzen o. g. Werte ergibt sich für $t_{Korr}$ = 26,4 + 0,38 = 26,78 s, d.h., die Dampfimpulsdauer der ersten Minute wird um 0,38 s verlängert.

Der Unterschied zwischen den *Gleichungen* $K = \frac{-3+6|\Delta\vartheta|}{100}$ und $K = \frac{\Delta\vartheta^2}{100}$ besteht bezüglich der korrigierenden Wirkung darin, dass bei Anwendung von Gleichung $K = \frac{\Delta\vartheta^2}{100}$ bei Temperaturdifferenzen $\Delta\vartheta$ bis 5 °K die korrigierende Wirkung kleiner ist als bei Gleichung $K = \frac{-3+6|\Delta\vartheta|}{100}$, aber ab $\Delta\vartheta$ größer 5 °K die korrigierende Wirkung größer wird. Als allgemeine Empfehlung ergibt sich daraus, dass bei Anwendung von Gleichung $K = \frac{\Delta\vartheta^2}{100}$ der Exponent, der im Beispiel mit 2 gewählt wurde, zwischen 1,5 bis 3 beträgt.

Durch vorstehend beschriebene Impulszeitkorrektur des ersten Impulses stellte sich in der zweiten Minute der Temperaturunterschied Soll-Ist auf ein $\Delta\vartheta$ von +0,6 °K ein.

Gemäß den mathematischen Beziehungen von Gleichung (4) und Gleichung (5) erfolgte sofort automatisch eine Zeitkorrektur um 0,1 sec auf eine Impulslänge von 26,3 s.

In der nachfolgenden Minute wurde ein $\Delta\vartheta$ von +1,1 °K ermittelt und daraus resultierend eine Zeitkorrektur um 0,32 s, auf 26,18 s.

Da in der dritten Minute zum zweiten Mal hintereinander eine Temperaturabweichung größer 0,5 °K bei gleichen Vorzeichen festgestellt wurde, wird automatisch eine "gleitende" Anpassung der Sollimpulslänge durchgeführt. Für die festgestellte Temperaturdifferenz von +1,1 °K ergibt sich durch Einsetzen in die Beziehung

$$t_{soll\ neu} = t_{soll\ alt} - (t_{soll\ alt} \times 0,5\ K)$$

eine Verkürzung der Sollimpulslänge um 0,16 sec auf 26,24 s. Nach zwei weiteren Minuten, in denen Temperaturdifferenzen größer 0,5 °K ermittelt und entsprechende analoge "gleitende" Impulszeitanpassungen durchgeführt wurden, stellte sich in der sechsten Minute nach Beginn der Regelphase eine Regelabweichung von kleiner 0,5 °K bei einer neuen Sollimpulsdauer von 26,1 s ein.

Nachdem in nachfolgenden weiteren drei Minuten unter Beibehaltung einer Sollimpulsdauer von 26,1 s die festgestellten Abweichungen kleiner 0,5 °K waren, konnte vom Erreichen eines quasistationären thermodynamischen Zustandes ausgegangen werden.

Die Werte des sich bei diesem Regelzustand im aufgestellten Diagramm des Koordinatensystem "Impulszeitmoduls" ergebenden Arbeitspunktes wurden in den Arbeitsspeicher der Regeleinrichtung übernommen, sodass bei Bedarf auf diese Einstellung zurückgegriffen werden kann.

### Heizkreislauf IV

In diesem Kreislauf wurde nach Erreichen einer Isttemperatur, die um 2 °C höher lag als die Solltemperatur, die stationäre Betriebsphase eingeleitet.

Gemäß analoger Berechnung wie im Heizkreislauf III (Gleichungen (4) und (5)) wurde nach 5 Minuten ein quasistationärer Temperaturzustand von $\Delta\vartheta$ kleiner 0,5 °K bei einer korrigierten neuen Sollimpulsdauer von 16,4 s erreicht.

Nachdem in jeweils drei weiteren Minuten nur Temperaturabweichungen Ist-Soll von kleiner 0,5 °K auftraten, wurden auch die Koordinaten dieses Arbeitspunktes in den Arbeitsspeicher übernommen.

Das Regelsystem zeigt dem Bediener über das Signal "Betriebsbereitschaft" an, dass mit dem Herstellungsprozess der Formteile begonnen werden kann.

Dies ist der Fall, wenn im automatischen Regelungsprozess für alle Heizkreise I bis IV erstmals drei Regelzyklen hintereinander eine Regelabweichung der Isttemperatur von der Solltemperatur in Höhe von < ± 2 °K eingehalten wurde.

Nunmehr beginnt die Herstellung der Formteile "Leuchtenträger", wobei die duroplastische Formmasse mit einer Temperatur von 80 °C in die beiden Formnester des leicht geöffneten Werkzeuges eingespritzt wird (jeweils 1350 g). Danach wird das Werkzeug geschlossen, wobei die Tauchkante die Kavität noch vor Ende des Schließhubs abschließt, damit nur flüchtige Spaltprodukte entweichen können und kein Material austreten kann.

Während des Press- bzw. Prägevorganges beginnt der Vernetzungs- bzw. Aushärtungsprozess, wobei optimale Bedingungen erreicht werden, wenn die vorgegebenen Solltemperaturen 165 °C und 155 °C für die Heizkreise I bis IV während der Spritzzyklen innerhalb der gesamten Betriebsperiode eingehalten werden.

### III. Stationäre Fertigungsperiode

Während der Herstellung bzw. Fertigung der Formteile erfolgt die Regelung der Werkzeugtemperatur grundsätzlich nach dem gleichen Regelungsmechanismus wie in der stationären Heizperiode

Da für die Regelung der Dampfzufuhr eine zyklussynchrone Arbeitsweise vorgesehen ist, erfolgt jedoch die Einleitung eines Dampfimpulses zu einem Zeitsignal, das aus der Ablaufsteuerung der Verarbeitungsmaschine abgeleitet wird. Dieses sollte in zeitlicher Nähe zum Werkzeugschließ- und Formgebungsvorgang stehen, vorzugsweise wird der Zeitpunkt "Werkzeug schließen" gewählt, wobei die Steuer und Regelungseinheit für die Werkzeugtemperatur dieses Signal S1 aus der Maschinenablaufsteuerung erhält.

Um den Zeitpunkt des zu Zyklusbeginn zuzuführenden Dampfimpulses optimal auf die Bedingungen und Erfordernisse des jeweiligen Werkzeuges und der folgenden Formgebung abstimmen zu können, ist eine zeitlich einstellbare Verzögerungszeit ab dem Signal S 1 "Werkzeug schließen" für das Auslösen des Dampfimpulses als wählbar in der Regeleinheit vorgesehen.

Da gemäß vorliegendem Beispiel die Werkzeugschließgeschwindigkeit der Spritzgießmaschine schnell und die Sollimpulszeiten relativ lang sind, wurde als Verzögerungszeit der Wert 0 gewählt, d. h. der erste Dampfimpuls wird synchron mit dem Signal S1, "Werkzeug schließen", für alle Heizkreisläufe I bis IV ausgelöst.

Um die Temperaturregelung in der stationären Fertigungsperiode in Einklang mit dem Regelverhalten der stationären Heizperiode zu bringen, ist es erforderlich, das impulsauslösende Signal aus der Ablaufsteuerung der Verarbeitungsmaschine regelungstechnisch mit dem zeitmodulierten impulsauslösenden Signal der stationären Heizperioden zu synchronisieren.

Um dies zu gewährleisten sind regelungstechnisch zwei Anpassungsvarianten vorgesehen:

**Variante A:** Regelung mit fest vorgegebenen Zeitmodul (im Beispiel wurde als Zeitmodul eine Minute gewählt)

Um die Bedingung "Auslösen der Sollimpulslänge (Öffnen des Stellventils für die Dampfzufuhr) stets zum Zeitpunkt S1 (plus evtl. Verzögerungszeit) einzuhalten, sind regelungstechnisch zwei Fälle zu definieren:

**Fall a):**

Zum Zeitpunkt des Signals S1 ist das Stellventil für die Dampfzufuhr geöffnet, es erfolgt gerade ein Impuls des minutenmodulierten Regelalgorithmus. Unabhängig davon wird trotzdem ab S1 noch die volle Länge (Zeitdauer) des Sollimpulses ausgelöst. Um abzusichern, dass in der Folge das mittlere Temperaturniveau konstant gehalten wird, muss nach Ende der Sollimpulsdauer eine verlängerte Pause ermittelt und eingehalten werden. Diese verlängerte Pausenzeit berechnet sich wie folgt:

$$(6) \quad t_{v,P} = \frac{t_{i,V} + t_{soll}}{t_{soll}} \cdot (60 - t_{soll}),$$

wobei

$t_{i,v}$ = Impulszeit die vor dem Signal ausgelöst wurde

$t_{v,P}$ = verlängerte Pause

$t_{soll}$ = Sollimpulsdauer gemäß Impulszeitmodul

bedeuten.

Regelungstechnisch betrachtet wird jedoch der zeitlich vor dem Signal S1 (Werkzeugschließen) liegende Impulszeitanteil mit dem ab dem Signal S1 folgenden Sollimpuls kumulativ gemäß oben angegebener Gleichung verschmolzen.

Die Messzeit $t_o$ bis $t_{75}$ beginnt mit Einleitung des zeitlich vor Werkzeugschließen (vor S1) einsetzenden Dampfimpulses und endet nach einer Zeitdauer von 75% der Sollimpulsdauer. Der Mittelwert der über diesen Zeitraum $t_o$ bis $t_{75}$ gemessenen Temperaturen wird wie vorgesehen zur Berechnung der korrigierten Sollimpulsdauer gemäß Gleichung (4) herangezogen. Die eventuell notwendige Korrektur von $t_{soll}$ wird aber an der Impulslänge vorgenommen, die ab S 1 beginnt. $t_{soll}$ in der vorangestellten Gleichung ist immer die im vorhergehenden Regelzyklus berechnete korrigierte $t_{soll}$-Zeit.

**Fall b):**

Zum Zeitpunkt des Signals S1 ist das Stellventil für die Dampfzufuhr geschlossen, es liegt eine sogenannte Pausenzeit an. Ungeachtet dessen wird nunmehr trotzdem zum Zeitpunkt des Signals S1 der Sollimpuls ausgelöst, also das Stellventil für die Dampfzufuhr geöffnet. Um abzusichern, dass im zeitlichen Mittel die Werkzeugtemperatur konstant bleibt, wird deshalb die noch fehlende Restpausenzeit mit der, dem Sollimpuls folgenden Pause "verschmolzen" zu einer verlängerten Pausenzeit.

$$(7) \quad t_{V,P} = t_{R,P} + t_P,$$

wobei

$t_{R,P}$ = Restpause

$t_{V,P}$ = verlängerte Pause

$t_p$ = Sollpause

bedeuten.

Erfolgt innerhalb der verlängerten Pausenzeit das Signal S 1 für den nachfolgenden

Spritzzyklus, so wird zu diesem Zeitpunkt S1 der obligatorische Sollimpuls eingeleitet. Die neue verlängerte Pausenzeit berechnet sich aus dem Rest der alten abgebrochenen verlängerten Pause plus neuer Sollpause, die sich aus der Impulslänge des aktuellen Impulses ableitet.

**Variante B:** Bei zykluszeitmodulierter Regelung

Bei zykluszeitmodulierter Regelung wird zunächst die Zykluszeit bei minutenmodulierten Prozessbedingungen durch Messung der Zeit zwischen den Signalen S 1 benachbarter Spritzzyklen ermittelt, unter Berücksichtigung eines oder mehrerer Spritzzyklen. Alternativ ist auch die feste Vorgabe der Zykluszeit durch den Maschinenbediener möglich.

Die Berechnung der Dampfimpulszeit bei zykluszeitmodulierter Fahrweise erfolgt mit Zeitmodul (ZM) = 60 Sekunden nach folgender Gleichung:

$$(8) \quad t_{Z,soll} = \frac{t_{soll}}{60} \cdot t_{Zykl},$$

wobei

$t_{Z,soll}$ = Impulslänge pro Zyklus

$t_{soll}$ = Impulslänge des letzten zeitmodulierten Impulses

$t_{Zykl}$ = Zykluszeit

bedeuten.

Der zykluszeitmodulierte Sollimpuls $t_{z\,soll}$ wird ebenfalls mit Beginn des Signals S 1 ausgelöst. Dieser Modus hat den Vorteil, dass die gesamte im Zyklus zur Aufrechterhaltung des gewünschten Temperaturniveaus des Werkzeuges notwendige Wärmemenge am Zyklusanfang eingebracht wird. Daraus resultieren die Vorteile für die mögliche Verkürzung der Zykluszeit (Härtezeit) und die fließtechnisch günstigeren Bedingungen beim Formgebungsvorgang gegenüber konventionellen Heizmethoden.

Die Werkzeugtemperaturregelung erfolgt bei zykluszeitmodulierter Fahrweise analog der minutenmodulierten. Bei zykluszeitmodulierter Regelung besteht jedoch die Gefahr möglicher Schwankungen der Zykluszeit, bedingt z.B. durch unterschiedlich lange Maschinenbewegungszeiten, spontan vorgenommene Bedienhandlungen u. a.

Um dadurch entstehenden thermodynamischen Veränderungen schnell entgegenzuwirken, wird bei dieser Fahrweise die Zykluszeit für jeden Zyklus von der Regeleinheit gemessen und bei Abweichungen, die einen festgelegten Wert übersteigen, z.B. >1%, wird sofort im Folgezyklus eine korrigierende Impulszeitanpassung gemäß nachfolgender Gleichung vorgenommen:

$$(9) \quad t_{Z_{Korr}} = \frac{t_{Z,soll} \cdot t_{Zykl,abw}}{t_{Zykl_{soll}}},$$

wobei

$t_{Z_{Korr}}$ = korrigierte Impulszeit bei neuem Zeitmodul

$t_{Z,soll}$ = Impulslänge pro Zyklus

$t_{Zykl,abw}$ = abweichende Zykluszeit

$t_{Zykl,soll}$ = Sollzykluszeit

bedeuten.

Damit werden vor allem größere Störungen der Zykluszeit, z.B. zusätzliches intensives Ausblasen von Grat, Trennebene säubern u. a., die vor allem bei dem Formpressen von Duroplasten auftreten, sofort im Folgezyklus thermisch korrigiert. Über die reine Temperaturregelung würde der Ausgleichsprozess auf Grund der thermischen Trägheit länger dauern.

Überschreitet eine Zyklusunterbrechung eine vorgegebene Zeit, so wird, um ein Abkühlen des Werkzeuges zu verhindern, automatisch wieder auf minutenmodulierte Regelung umgestellt. Als maximales Maß einer geduldeten Zyklusüberschreitung wird ca. 1 min empfohlen.

Versuche mit dem erfindungsgemäße Regelungsverfahren zeigten, dass der stationäre Betriebszustand für eine Fertigung der Leuchtenträger schnell erreicht wird und sich eine Regelgenauigkeit von plus minus 0,8 °K einstellt.

Größere thermodynamische Störungen werden noch im gleichen Zyklus erkannt und ausgeregelt. Besonders vorteilhaft wirkt sich das exakt dosierte Einbringen der gesamten oder des größten Teils der pro Zyklus benötigten Wärmemenge zu Zyklusbeginn aus. Somit kann der Formgebungsvorgang bei höheren Werkzeugkonturtemperaturen stattfinden. Die Folge ist ein besseres, formgetreueres Ausfließen der Formmasse bei der Formgebung und daraus resultierend eine Reduzierung von technologisch bedingtem Ausschuss. Des Weiteren resultiert aus dem höheren Energieeintrag in das Werkzeug zu Zyklusbeginn eine mögliche Reduzierung der Zykluszeit um 5 bis 15%.

Die Aufheizung und Regelung der Werkzeugtemperatur zur Herstellung der Leuchtenträger gemäß dem aufgezeigten Beispiel ermöglichten eine stabile qualitätsgerechte Fertigung unter Einhaltung einer Zykluszeit von 65 s. Eine Verkürzung der Zykluszeit führt als Nebeneffekt zu Heizkosteneinsparungen für die Bereitstellung von Dampf. Somit lassen sich Produktivitätssteigerung um bis zu 15% und Senkungen der Ausschussquote um bis zu 30% erzielen.

Tabelle 1

| Auszug aus der Aufheizmatrix für Dampftemperatur 180°C | | | | | |
|---|---|---|---|---|---|
| Soll-temperatur | Aufheizzeit [min] | | | | |
| °C | sehr schnell | schnell | normal | lang-sam | träge |
| 145 | 4,3 | 18,2 | 41 | 68,4 | 98,8 |
| 146 | 4,3 | 18,6 | 41,8 | 69,7 | 100,7 |
| 147 | 4,4 | 18,9 | 42,6 | 71 | 102,6 |
| 148 | 4,5 | 19,3 | 43,5 | 72,4 | 104,6 |
| 149 | 4,6 | 19,7 | 44,3 | 73,9 | 106,7 |
| 150 | 4,7 | 20,1 | 45,2 | 75,3 | 108,8 |
| 151 | 4,8 | 20,5 | 46,1 | 76,9 | 111 |
| 152 | 4,9 | 20,9 | 47,1 | 78,4 | 113,3 |
| 153 | 5 | 21,4 | 48 | 80,1 | 115,7 |
| 154 | 5,1 | 21,8 | 49,1 | 81,8 | 118,1 |
| 155 | 5,2 | 22,3 | 50,1 | 83,5 | 120,7 |
| 156 | 5,3 | 22,8 | 51,2 | 85,4 | 123,3 |
| 157 | 5,4 | 23,3 | 52,4 | 87,3 | 126,1 |
| 158 | 5,6 | 23,8 | 53,6 | 89,3 | 129 |
| 159 | 5,7 | 24,4 | 54,8 | 91,4 | 132 |
| 160 | 5,8 | 25 | 56,1 | 93,6 | 135,2 |
| 161 | 6 | 25,6 | 57,5 | 95,9 | 138,5 |
| 162 | 6,1 | 26,2 | 59 | 98,3 | 142 |
| 163 | 6,3 | 26,9 | 60,5 | 100,9 | 145,7 |
| 164 | 6,4 | 27,6 | 62,2 | 103,6 | 149,7 |
| 165 | 6,6 | 28,4 | 63,9 | 106,5 | 153,9 |
| 166 | 6,8 | 29,2 | 65,8 | 109,6 | 158,3 |
| 167 | 7 | 30,1 | 67,8 | 113 | 163,2 |
| 168 | 7,3 | 31,1 | 69,9 | 116,6 | 168,4 |
| 169 | 7,5 | 32,1 | 72,3 | 120,5 | 174 |
| 170 | 7,8 | 33,3 | 74,9 | 124,8 | 180,2 |
| 171 | 8,1 | 34,5 | 77,7 | 129,5 | 187,1 |
| 172 | 8,4 | 35,9 | 80,9 | 134,8 | 194,7 |
| 173 | 8,8 | 37,6 | 84,5 | 140,8 | 203,4 |
| 174 | 9,2 | 39,4 | 88,7 | 147,8 | 213,4 |
| 175 | 9,7 | 41,6 | 93,6 | 156 | 225,3 |

Tabelle 2

| Auszug aus der Einschwenkmatrix für Einschwenkdauer $\tau_1$ der ersten Einschwenkphase bei Dampftemperatur 180°C | | | | | |
|---|---|---|---|---|---|
| Soll-temperatur | Einschwenkdauer ($\tau_1$) [min] | | | | |
| °C | sehr schnell | schnell | normal | langsam | träge |
| 145 | 4 | 6 | 8 | 11 | 10 |
| 146 | 4 | 6 | 9 | 12 | 11 |
| 147 | 4 | 7 | 9 | 12 | 11 |
| 148 | 4 | 7 | 10 | 13 | 12 |
| 149 | 4 | 7 | 10 | 14 | 13 |
| 150 | 4 | 8 | 11 | 15 | 13 |
| 151 | 5 | 8 | 11 | 16 | 14 |
| 152 | 5 | 9 | 12 | 17 | 15 |
| 153 | 5 | 9 | 13 | 18 | 16 |
| 154 | 5 | 10 | 14 | 19 | 16 |
| 155 | 6 | 10 | 14 | 20 | 17 |
| 156 | 6 | 11 | 15 | 21 | 18 |
| 157 | 6 | 12 | 16 | 22 | 19 |
| 158 | 6 | 12 | 17 | 24 | 20 |
| 159 | 7 | 13 | 18 | 25 | 21 |
| 160 | 7 | 14 | 19 | 27 | 23 |
| 161 | 7 | 14 | 20 | 28 | 24 |
| 162 | 7 | 15 | 22 | 30 | 25 |
| 163 | 8 | 16 | 23 | 32 | 27 |
| 164 | 8 | 17 | 24 | 34 | 28 |
| 165 | 9 | 18 | 26 | 36 | 30 |
| 166 | 9 | 19 | 27 | 38 | 31 |
| 167 | 9 | 20 | 29 | 40 | 33 |
| 168 | 10 | 21 | 30 | 43 | 35 |
| 169 | 10 | 23 | 32 | 46 | 37 |
| 170 | 11 | 24 | 34 | 48 | 39 |
| 171 | 11 | 25 | 36 | 51 | 41 |
| 172 | 11 | 27 | 38 | 54 | 43 |
| 173 | 12 | 28 | 40 | 58 | 45 |
| 174 | 13 | 30 | 43 | 61 | 48 |
| 175 | 13 | 31 | 45 | 65 | 51 |

Tabelle 3

| Auszug aus der Einschwenkmatrix für Einschwenkdauer $\tau_2$ der zweiten und weiterfolgende(n) Einschwenkphase(n) bei Dampftemperatur 180°C | | | | | |
|---|---|---|---|---|---|
| Soll-temperatur | Einschwenkdauer ($\tau_2$) [min] | | | | |
| °C | sehr schnell | schnell | normal | langsam | träge |
| 145 | 2 | 3 | 4 | 6 | 8 |
| 146 | 2 | 3 | 4 | 6 | 8 |
| 147 | 2 | 3 | 5 | 6 | 8 |
| 148 | 2 | 4 | 5 | 7 | 9 |
| 149 | 2 | 4 | 5 | 7 | 9 |
| 150 | 2 | 4 | 5 | 7 | 10 |
| 151 | 2 | 4 | 6 | 8 | 10 |
| 152 | 2 | 4 | 6 | 8 | 11 |
| 153 | 3 | 5 | 6 | 9 | 12 |
| 154 | 3 | 5 | 7 | 9 | 12 |
| 155 | 3 | 5 | 7 | 10 | 13 |
| 156 | 3 | 5 | 8 | 11 | 14 |
| 157 | 3 | 6 | 8 | 11 | 14 |
| 158 | 3 | 6 | 9 | 12 | 15 |
| 159 | 3 | 6 | 9 | 13 | 16 |
| 160 | 3 | 7 | 10 | 13 | 17 |
| 161 | 4 | 7 | 10 | 14 | 18 |
| 162 | 4 | 8 | 11 | 15 | 19 |
| 163 | 4 | 8 | 11 | 16 | 20 |
| 164 | 4 | 9 | 12 | 17 | 21 |
| 165 | 4 | 9 | 13 | 18 | 22 |
| 166 | 4 | 10 | 14 | 19 | 23 |
| 167 | 5 | 10 | 14 | 20 | 25 |
| 168 | 5 | 11 | 15 | 21 | 26 |
| 169 | 5 | 11 | 16 | 23 | 28 |
| 170 | 5 | 12 | 17 | 24 | 29 |
| 171 | 6 | 13 | 18 | 26 | 31 |
| 172 | 6 | 13 | 19 | 27 | 32 |
| 173 | 6 | 14 | 20 | 29 | 34 |
| 174 | 6 | 15 | 21 | 31 | 36 |
| 175 | 7 | 16 | 23 | 32 | 38 |

Tabelle 4

| Auszug aus der Impulszeitmatrix für Dampftemperatur 180°C | | | | | |
|---|---|---|---|---|---|
| Soll-temperatur | Impulszeit ($t_{Soll}$) [s/min] | | | | |
| °C | sehr schnell | schnell | normal | lang-sam | träge |
| 145 | 7,3 | 10,2 | 13,1 | 16,02 | 18,93 |
| 146 | 7,4 | 10,4 | 13,3 | 16,31 | 19,28 |
| 147 | 7,6 | 10,6 | 13,6 | 16,61 | 19,63 |
| 148 | 7,7 | 10,8 | 13,8 | 16,92 | 20 |
| 149 | 7,8 | 11 | 14,1 | 17,24 | 20,38 |
| 150 | 8 | 11,2 | 14,4 | 17,57 | 20,76 |
| 151 | 8,1 | 11,4 | 14,7 | 17,91 | 21,16 |
| 152 | 8,3 | 11,6 | 14,9 | 18,26 | 21,58 |
| 153 | 8,5 | 11,8 | 15,2 | 18,62 | 22 |
| 154 | 8,6 | 12,1 | 15,5 | 18,99 | 22,44 |
| 155 | 8,8 | 12,3 | 15,9 | 19,38 | 22,9 |
| 156 | 9 | 12,6 | 16,2 | 19,78 | 23,37 |
| 157 | 9,2 | 12,8 | 16,5 | 20,19 | 23,86 |
| 158 | 9,4 | 13,1 | 16,9 | 20,62 | 24,37 |
| 159 | 9,6 | 13,4 | 17,2 | 21,07 | 24,9 |
| 160 | 9,8 | 13,7 | 17,6 | 21,54 | 25,46 |
| 161 | 10 | 14 | 18 | 22,03 | 26,04 |
| 162 | 10,2 | 14,3 | 18,4 | 22,54 | 26,64 |
| 163 | 10,5 | 14,7 | 18,9 | 23,08 | 27,27 |
| 164 | 10,7 | 15 | 19,3 | 23,64 | 27,94 |
| 165 | 11 | 15,4 | 19,8 | 24,24 | 28,64 |
| 166 | 11,3 | 15,8 | 20,3 | 24,87 | 29,39 |
| 167 | 11,6 | 16,2 | 20,9 | 25,53 | 30,18 |
| 168 | 11,9 | 16,7 | 21,5 | 26,24 | 31,01 |
| 169 | 12,3 | 17,2 | 22,1 | 27 | 31,91 |
| 170 | 12,6 | 17,7 | 22,8 | 27,82 | 32,87 |
| 171 | 13 | 18,3 | 23,5 | 28,7 | 33,91 |
| 172 | 13,5 | 18,9 | 24,3 | 29,65 | 35,05 |
| 173 | 14 | 19,5 | 25,1 | 30,7 | 36,29 |
| 174 | 14,5 | 20,3 | 26,1 | 31,86 | 37,65 |
| 175 | 15,1 | 21,1 | 27,1 | 33,16 | 39,19 |

**Patentansprüche**

1. Verfahren zur Aufheizung und Regelung einer Temperatur eines mit einem flüssigen und/oder dampfförmigen Wärmeträger beheizten Werkzeuges mit mindestens einem Heizkreislauf zur Formgebung und/oder Fixierung von Formteilen aus wärmehärtbaren oder vernetzungsfähigen polymeren Werkstoffen, sowie Mitteln zur Durchführung eines Soll-/Ist-Vergleiches einer gemessenen Isttemperatur als Regelgröße mit einer vorgegebenen Solltemperatur, einer computerbezogenen Steuer- und Regeleinheit, einem Heizprofil, einem Aufheizmodul, mindestens einem Einschwenkmodul und einem Impulszeitmodul, **dadurch gekennzeichnet, dass** vor Beginn eines Aufheiz- und Regelungsprozesses im Speicher der Steuer- und Regeleinheit ein heizkreisspezifisches Heizprofil als Basis für die Regelung der Werkzeugtemperatur hinterlegt wird, das aus mindestens dem Aufheizmodul mit Aufheizzeiten in Abhängigkeit von der vorgegebenen Solltemperatur und heizkreisspezifischen Aufheizcharakteristiken, einem ersten und einem zweiten Einschwenkmodul mit Werten zur Einschwenkdauer in Abhängigkeit von der Solltemperatur und den Aufheizcharakteristiken, wobei ein Einschwenkmodul das Arbeitsfeld hinsichtlich des Zusammenhanges zwischen Einschwenkdauer, Aufheizcharakteristik und Solltemperatur, basierend auf einer spezifischen Form einer Potentialfunktion mit reziprokem Exponenten oder auf einer logarithmischen Beziehung, beinhaltet, und dem Impulszeitmodul mit Sollimpulszeiten für die Wärmeträgerzufuhr in Abhängigkeit von der Solltemperatur und den Aufheizcharakteristiken, gebildet wird, wobei die einzelnen Module einer bestimmten Temperatur des Wärmeträgers zugeordnet sind, und vor Aufheizbeginn heizkreisspezifisch eine Aufheizcharakteristik ausgewählt wird.

2. Verfahren nach Anspruch 1, **dadurch gekennzeichnet, dass** der Aufheiz- und Regelungsprozess in mindestens zwei Perioden, eine Aufheizperiode mit mindestens einer Aufheizphase und mindestens einer Einschwenkphase und eine stationäre Heizperiode mit unterschiedlichem Regelverhalten, unterteilt wird, wobei die stationäre Heizperiode zur weiteren Regelung der Beheizung des Werkzeuges zur Aufrechterhaltung des stationären Heizzustandes bestimmt ist, während der Perioden das Wärmeträgermedium dem Heizkreislauf zugeführt wird, in der Einschwenkphase die Zufuhr an Wärmeträgermedium zeitgesteuert unterbrochen wird, die Isttemperatur am Werkzeug, unmittelbar an der Eintrittsstelle des Wärmeträgermediums in das Werkzeug, gemessen wird, erstmalig während der ersten Einschwenkphase, und die Zuführung des Wärmeträgermediums in der stationären Heizperiode in Abhängigkeit vom Soll/Ist-Temperaturvergleich zeitgesteuert unterbrochen wird, derart, dass Wärmeträgermedienimpulse unterschiedlicher Länge oder Zeitdauer gebildet werden mit erforderlichenfalls zeitgesteuerten vollständigen Unterbrechungen der Zufuhr an Wärmeträgermedium als Pausenzeiten, und die temperaturabhängigen Veränderungen durch Zufuhr an Wärmeträgermedium über ein in eine "offene" und "geschlossene" Stellung betätigbares Ventil erfolgen, wobei die zeitgesteuerte Betätigung des Ventils über einen vorgegebenen Regelalgorithmus vorgenommen wird.

3. Verfahren nach Anspruch 2, **dadurch gekennzeichnet, dass** in der Aufheizperiode die durch kontinuierliche Wärmeträgerzuführung charakterisierte Aufheizphase beendet wird, unter der Annahme, eine aus dem Heizprofil bei einer vorbestimmten Aufheizcharakteristik zugeordnete Isttemperatur liegt um einen bestimmten Betrag von 2 bis 10% der Solltemperatur, unterhalb der Solltemperatur.

4. Verfahren nach einem der Ansprüche 1 bis 3, **dadurch gekennzeichnet, dass** während der ersten Einschwenkphase zeitmoduliert sich degressiv verkürzende Wärmeträgerimpulse eingeleitet werden, um die Isttemperatur dosiert an die Solltemperatur heranzuführen, der erstmalige Vergleich der Isttemperatur mit der Solltemperatur zu Beginn des letzten Zeitmoduls dieser Einschwenkphase vorgenommen wird, wobei bei Abweichungen der Isttemperatur von der Solltemperatur, die größer als ein unterer Grenzwert unterhalb der Solltemperatur oder größer als ein oberer Grenzwert oberhalb der Solltemperatur sind, eine Verlängerung oder Verkürzung, erforderlichenfalls bis auf den Wert 0, der Wärmeträgerimpulsdauer des letzten Zeitmoduls der ersten Einschwenkphase vorgenommen wird, und am Ende der ersten Einschwenkphase ein zweiter Vergleich der Soll-/Ist-Temperatur durchgeführt wird, wobei bei Abweichungen innerhalb eines Toleranzbereiches der Übergang in die stationäre Heizperiode erfolgt, und bei Abweichungen, die außerhalb des Toleranzbereiches liegen, regelungstechnisch weitere Korrekturen eingeleitet werden.

5. Verfahren nach Anspruch 4, **dadurch gekennzeichnet, dass** die Zeitdauer der Wärmeträgerimpulse für die erste zeitmodulierte degressive Einschwenkphase $\tau$ nach folgender Berechnungsformel ermittelt wird:

$$t = ZM - \frac{(ZM - t_{soll})}{\tau} \cdot \tau^* \qquad (1),$$

wobei

$t$ die Impulsdauer zum jeweiligen Istzeitpunkt, $t_{soll}$ die Sollimpulsdauer gemäß Impulszeitmodul, $\tau^*$ die aktuelle

EP 2 615 518 B1

Bezugszeit ab Beginn Einschwenkphase, $\tau$ die Dauer der Einschwenkphase in min (Einschwenkdauer, beginnt mit 1) und *ZM* das Zeitmodul in Sekunden bedeuten;
und die Einschwenkdauer aus dem ersten Einschwenkmodul abgeleitet wird.

6. Verfahren nach einem der Ansprüche 4 oder 5, **dadurch gekennzeichnet, dass** die Korrekturen wie folgt vorgenommen werden:

a) bei um 5 bis 15 °K zu niedriger Isttemperatur wird zuerst eine Nachheizzeit eingeleitet, deren Zeitdauer für die Wärmeträgereinleitung aus dem Aufheizmodul in der Weise abgeleitet wird, dass die Differenz zwischen der Aufheizzeit bei der gewählten Solltemperatur und der Aufheizzeit bei der gemessenen Isttemperatur gebildet und mit einem Dämpfungsfaktor zwischen 0,5 und 0,9 multipliziert wird und unmittelbar danach eine zweite zeitmodulierte degressive Einschwenkphase eingeleitet wird, deren Zeitdauer für den Dampfimpuls gemäß Gleichung (1) berechnet wird, unter Berücksichtigung der aus dem zweiten Einschwenkmodul abgeleiteten Einschwenkdauer,

oder

b) bei um mehr als 15 °K zu niedriger Isttemperatur wird regelungstechnisch automatisch ein Wechsel in eine Aufheizcharakteristik mit längerer Aufheizdauer vorgenommen und eine Nachheizzeit ausgelöst, die in Abhängigkeit von der Höhe der Abweichung nach folgender Formel berechnet wird:

$$t_N = \left(t_{A_{soll}} - \tau_2\right) - t_{A_{ist}} \qquad (2),$$

wobei

$t_N$ die Nachheizzeit, $t_{A_{soll}}$ die Aufheizzeit bei Solltemperatur und neuer Aufheizcharakteristik, $t_{A_{ist}}$ die Aufheizzeit bei Isttemperatur und neuer Aufheizcharakteristik und $\tau_2$ die Einschwenkdauer gemäß zweiter Einschwenkmatrix bei neuer Aufheizcharakteristik und Solltemperatur bedeuten;
und danach eine zweite zeitmodulierte degressive Einschwenkphase eingeleitet wird und analog weiter geregelt wird wie nach Einleitung der zweiten Einschwenkphase gemäß a),

oder

c) bei um 5 bis 15 °K zu hoher Isttemperatur wird zuerst eine Heizpause eingeleitet, deren Zeitdauer als Differenz aus den der Ist- und Solltemperatur zugeordneten Zeiten im Aufheizmodul ermittelt wird, multipliziert mit einem vorgegebenen Dämpfungsfaktor zwischen 0,5 und 0,9, und danach eine zeitmodulierte progressive Einschwenkphase mit vorgegebener Einschwenkdauer eingeleitet wird, wobei die Impulszeitdauer der pro Zeitmodul einzuleitenden Dampfimpulse nach folgender Berechnungsformel ermittelt wird:

$$t = \frac{t_{soll}}{\tau} \cdot (\tau^*) \qquad (3),$$

wobei

t die Impulsdauer in s/min zum jeweiligen Istzeitpunkt, t$_{soll}$ die Sollimpulslänge in s/min bei Solltemperatur gemäß Aufheizmodul, $\tau$ die Einschwenkdauer und
$\tau^*$ die aktuelle Bezugszeit (beginnt nach Ende der Pausenzeit) bedeuten;

oder

d) bei um mehr als 15 °K zu hoher Isttemperatur wird regelungstechnisch automatisch ein Wechsel in eine Aufheizcharakteristik mit kürzerer Aufheizdauer vorgenommen, wobei zuerst eine "Heizpause" ausgelöst wird, um die Isttemperatur zu verringern, deren Zeitdauer als Differenz zwischen der Aufheizzeit bei Solltemperatur gemäß der ursprünglich gewählten Aufheizcharakteristik und der Aufheizzeit bei Solltemperatur gemäß der neuen Aufheizcharakteristik mit kürzerer Aufheizdauer, multipliziert mit einem Dämpfungsfaktor zwischen 0,5 und 0,9, ermittelt wird, und danach eine zeitmodulierte progressive Einschwenkphase mit Wärmeträgerimpulsen analog c) eingeleitet wird.

7. Verfahren nach Anspruch 6, **dadurch gekennzeichnet, dass** bei Einleitung einer progressiven Einschwenkphase eine Zeitdauer, die dem von 5 bis 15, vorzugsweise 10fachen des gewählten Zeitmoduls entspricht, vorgegeben wird, wobei die zeitliche Vorgabe als Korrelation zwischen dem Dämpfungsfaktor und der Einschwenkdauer in der Weise wirkt, dass bei größer gewähltem Dämpfungsfaktor die Einschwenkdauer kleiner zu bemessen ist und umgekehrt.

8. Verfahren nach einem der Ansprüche 2 bis 7, **dadurch gekennzeichnet, dass** während der stationären Heizperiode der Mittelwert der Temperatur, die vom Beginn des jeweiligen Wärmeträgerimpulses über eine Messzeit von 40 bis 90%, vorzugsweise 75%, der auszulösenden Impulslänge ermittelt wird, und in Abhängigkeit von der gemessenen Temperaturdifferenz zwischen dem Mittelwert der Isttemperatur und der Solltemperatur zum Ende der Messzeit eine Korrektur der Impulsdauer als sogenannte korrigierte Impulsdauer ermittelt wird über die nach der Messzeit die weitere Zeitdauer des aktuellen Wärmeträgerimpulses verkürzt oder verlängert wird.

9. Verfahren nach Anspruch 8, **dadurch gekennzeichnet, dass** die korrigierte Impulsdauer zur Verkürzung oder Verlängerung des aktuellen Wärmeträgerimpulses wie folgt ermittelt wird:

$$t_{Korr} = t_{soll} \pm t_{soll} \cdot K \qquad (4),$$

wobei

$t_{Korr}$ die korrigierte Impulsdauer, $t_{soll}$ die Impulsdauer bei Solltemperatur (der Wert der Solltemperatur wird aus dem Impulszeitmodul abgeleitet) und K ein temperaturabhängiger Korrekturfaktor bedeuten;
und bei positiver Temperaturdifferenz die Differenzenform und bei negativer Temperaturdifferenz die Summenform von Gleichung (4) angewendet wird.

10. Verfahren nach einem der Ansprüche 2 bis 9, **dadurch gekennzeichnet, dass** während der Regelung in der stationären Heizperiode nach Einleitung des ersten Wärmeträgerimpulses für alle Folgeimpulse eine "gleitende" Anpassung der Sollimpulslänge vorgenommen wird, wenn die Abweichungen zwischen Ist- und Solltemperatur mindestens 0,5 °K betragen und das Vorzeichen der aktuell ermittelten Temperaturabweichung mit den in einer festgelegten Anzahl unmittelbar vorangegangener Dampfimpulse ermittelten Abweichungen übereinstimmt, wobei eine neue Sollimpulsdauer $t_{soll\ neu}$ wie folgt berechnet wird:

$$t_{soll\ neu} = t_{soll} \pm t_{soll} \cdot \alpha \cdot K \qquad (5),$$

wobei $t_{soll}$ die letzte aktualisierte Sollimpulslänge, $K$ der aktuell ermittelte Wert des temperaturabhängigen Korrekturfaktors und $\alpha$ ein Dämpfungsfaktor, dessen Betrag zwischen 0,3 und 1, vorzugsweise bei 0,5 liegt, bedeuten.

11. Verfahren nach einem der Ansprüche 2 bis 10, **dadurch gekennzeichnet, dass** eine Fertigungsperiode zur Formgebung und/oder Fixierung von Formteilen dann eingeleitet wird, wenn ein vorgegebener Toleranzwert einer Regelabweichung beim Vergleich Soll-Ist-Temperatur in der stationären Heizperiode mindestens einmal unterschritten wurde, die Zuführung des Wärmeträgers während der Fertigungsperiode mit dem Zeitpunkt zur Auslösung eines Signals aus der Ablaufsteuerung der Fertigungsmaschine synchronisiert wird und in der nachfolgenden Fertigungsperiode die Regelung gemäß der stationären Heizperiode beibehalten wird, wobei das Einleiten eines Wärmeträgerimpulses durch das Signal aus der Ablaufsteuerung der Fertigungsmaschine ausgelöst wird und regelungstechnisch die Einleitung und zeitliche Bemessung von Wärmeträgerimpulsen an den Zeitpunkt der zyklussynchronen Signalauslösung und die Dauer des Fertigungszyklus angepasst werden.

12. Verfahren nach Anspruch 11, **dadurch gekennzeichnet, dass** bei zeitmodulierter Regelung in der Fertigungsperiode in zwei Fälle unterschieden wird, wobei im ersten Fall, wenn zum Zeitpunkt der Auslösung des ausgewählten Signals aus der AblaufSteuerung der Fertigungsmaschine bereits Wärmeträgermedium zugeführt wird, nach-folgend ab diesem Zeitpunkt Wärmeträgermedium mit der berechneten Sollimpulsdauer eingeleitet und eine verlängerte Pausenzeit nach folgender Gleichung ermittelt, und ausgelöst wird:

$$t_{v,P} = \frac{t_{i,V} + t_{soll}}{t_{soll}} \cdot (ZM - t_{soll}) \qquad (6),$$

wobei

$t_{V,P}$ *die* verlängerte Pause, $t_{i,V}$ die Impulszeit die vor dem Signal ausgelöst wurde und
*ZM* das ausgewählte Zeitmodul in Sekunden bedeuten,
und im zweiten Fall, wenn zum Zeitpunkt der Auslösung des ausgewählten Signals aus der Ablaufsteuerung der Fertigungsmaschine das Stellventil für die Dampfzufuhr geschlossen ist, wird dieses wieder geöffnet und Wärmeträger mit der berechneten Sollimpulsdauer eingeleitet und nachfolgend eine Unterbrechung der Wärmeträgerzufuhr in Form einer verlängerten Pausenzeit $t_{V,P}$ nach folgender Gleichung ermittelt und ausgelöst wird:

$$t_{V,P} = t_{R,P} + t_P \qquad (7),$$

wobei $t_{R,P}$ die Restpause und $t_P$ Sollpause gemäß zeitmodulierter Regelung bedeuten.

**13.** Verfahren nach einem der Ansprüche 11 oder 12, **dadurch gekennzeichnet, dass** bei zyklusmodulierter Regelung in der Fertigungsperiode die Zeit zwischen zwei identischen Signalen benachbarter Zyklen ermittelt wird oder diese Zeit bereits vorgegeben ist, die Sollimpulsdauer nach folgender Gleichung ermittelt wird:

$$t_{Z,soll} = \frac{t_{soll}}{ZM} \cdot t_{Zykl} \qquad (8),$$

wobei

$t_{Z,soll}$ die Impulslänge/Zykluszeit, $t_{soll}$ die Impulslänge des letzten zeitmodulierten Impulses, ZM das ausgewählte Zeitmodul in Sekunden und $t_{Zykl}$ die Zykluszeit in Sekunden bedeuten;
und der Sollimpuls $t_{Z,soll}$ mit Beginn des Signals ausgelöst wird.

**14.** Verfahren nach Anspruch 13, **dadurch gekennzeichnet, dass** bei Überschreitungen der gemessenen aktuellen Zykluszeit von einem vorgegebenen Sollwert, im Folgezyklus eine Anpassung der Wärmeträgerimpulsdauer vorgenommen wird, gemäß folgender Gleichung:

$$t_{Z_{Korr}} = \frac{t_{Z,soll} \cdot t_{Zykl,abw}}{t_{Zykl_{soll}}} \qquad (9),$$

wobei

$t_{Z_{Korr}}$ die korrigierte Impulszeit für Folgezyklus, $t_{Z,soll}$ die Sollimpulszeit, $t_{Zykl,abw}$ die abweichende Zykluszeit und $t_{Zykl_{soll}}$ die Sollzykluszeit bedeuten.

**15.** Verfahren nach einem der Ansprüche 12 bis 14, **dadurch gekennzeichnet, dass** bei einer Unterbrechung einer festgelegten Zyklusdauer über ein vorgegebenes Zeitmaß automatisch wieder auf zeitmodulierte Regelung umgeschaltet wird.

**Claims**

**1.** A method for heating up and closed-loop control of a temperature of a tool heated by means of a liquid and/or vaporous heat carrier medium and with at least one heating circuit for forming and/or fixing molded parts made of thermosetting or cross-linkable polymer materials, as well as with means for carrying out a target/actual comparison of a measured actual temperature as a control variable with a predetermined target temperature, a computer-linked open-loop and closed-loop control unit, a heating profile, a heat-up module, at least one swivelling module and a pulse duration module, **characterized in that** before the start of a heat-up and closed-loop control process, a heating circuit specific heating profile is stored in the memory of the open-loop and closed-loop control unit as a basis for the closed-loop control of the tool temperature, the profile being formed at least by the heat-up module with heat-up durations, which depend on the predetermined target temperature and heating circuit specific heat-up characteristics, a first and a second swivelling module with values regarding the swivelling duration, which depend on the target temperature and the heat-up characteristics, wherein a swivelling module contains the working range with regard to the correlation between the swivelling duration, the heat-up characteristic and the target temperature, based on a specific form of a potential function with reciprocal exponents or on a logarithmic relationship, and the pulse duration module with target pulse durations for the supply of the heat carrier medium, which depend on the target temperature and the heat-up characteristics, wherein the individual modules are associated with a specific temperature of the heat carrier medium and a heating circuit specific heat-up characteristic is selected before the start of the heat-up process.

2. The method according to claim 1, **characterized in that** the heat-up and closed-loop control process is divided into at least two periods, a heat-up period with at least one heat-up phase and at least one swivelling phase, and a stationary heating period with a different closed-loop control behavior, wherein the stationary heat-up period serves for further closed-loop control of the heating of the tool for maintaining the stationary heating state, during the periods, the heat carrier medium is supplied to the heating circuit, in the swivelling period, the supply of the heat carrier medium is interrupted in a time-controlled manner, the actual temperature at the tool, immediately at the point of entry of the heat carrier medium into the tool, is first measured during the first swivelling phase, and the supply of the heat carrier medium in the stationary heating phase is interrupted in a time-controlled manner depending on the target/actual temperature comparison, in such a manner that heat carrier medium pulses of different lengths or durations are formed, if necessary with time-controlled complete interruptions of the supply of the heat carrier medium as break times and the temperature dependent modifications are carried out by supplying the heat carrier medium via a valve that can be actuated into an "open" and "closed" position, wherein the time-controlled actuation of the valve is carried out by way of a predefined closed-loop control algorithm.

3. The method according to claim 2, **characterized in that** during the heat-up period, the heat-up phase, which is **characterized by** a continuous heat carrier medium supply, is ended, assuming that an actual temperature from the heating profile associated with a selected predefined heat-up characteristic lies under the target temperature by a specific amount of 2 to 10% of the target temperature.

4. The method according to one of the claims 1 to 3, **characterized in that** during the first swivelling phase degressively shortening heat carrier medium pulses are introduced in a time-modulated manner, in order to bring the actual temperature up to the target temperature in a regulated manner, the first comparison of the actual temperature with the target temperature is carried out at the beginning of the last time module of this swivelling phase, wherein in case of deviations of the actual temperature from the target temperature that are greater than a lower limit value below the target temperature and greater than a upper limit value above the target temperature, an extension or a reduction, if necessary down to 0, of the heat carrier medium pulse duration of the last time module of the first swivelling phase is carried out and at the end of the first swivelling phase, a second comparison of the target/actual temperature is carried out, wherein in case of deviations within a tolerance range, a transition into the stationary heating period is carried out and in case of deviations outside of the tolerance range, further closed-loop controlled corrections are initiated.

5. The method according to claim 4, **characterized in that** the duration of the heat carrier medium pulses for the first time-modulated degressive swivelling phase $\tau$ is calculated using the following calculation formula:

$$t = ZM - \frac{(ZM - t_{soll})}{\tau} \cdot \tau'' \qquad (1),$$

wherein

$t$ is the pulse duration at the respective actual moment, $t_{soll}$ is the target pulse duration according to the pulse duration module, $\tau''$ is the current reference time from the start of the swivelling phase, $\tau$ is the duration of the swivelling phase in min (swivelling duration, starts with 1) and $ZM$ is the time module in seconds; and the swivelling duration is deducted from the first swivelling module.

6. The method according to one of the claims 4 or 5, **characterized in that** the corrections are made as follows:

a) if the actual temperature is too low by 5 to 10°K, a reheating period is first initiated, whose duration for introducing the heat carrier medium from the heat-up module is determined in such a manner that the difference between the heat-up time at the selected target temperature and the heat-up time at the measured actual temperature is determined and multiplied by an attenuation factor of 0.5 to 0.9, after which a second time-modulated degressive swivelling phase is immediately initiated, whose duration for the vapour pulse is calculated using the equation (1), while taking the duration of the swivelling phase determined from the second swivelling module into account,

or

b) if the actual temperature is too low by more than 15 °K, a closed-loop controlled automatic transition to a heat-up characteristic with a longer heat-up duration is carried out and a reheating time is triggered, which is calculated as a function of the amount of the deviation using the following formula:

$$t_N = \left(t_{A_{soll}} - \tau_2\right) - t_{A_{ist}} \qquad (2),$$

wherein

$t_N$ is the reheating time, $t_{A_{soll}}$ is the heat-up time at the target temperature and with a new heat-up characteristic, $t_{A_{ist}}$ is the heat-up time at the actual temperature and with a new heat-up characteristic and $\tau_2$ is the swivelling duration according to the second swivelling matrix with a new heat-up characteristic and at the target temperature,

after which a second time-modulated degressive swivelling phase is initiated and further controlled in a manner similar to after the initiation of the second swivelling phase according to a),

or

c) if the actual temperature is too high by 5 to 15 °K, a heating pause is first initiated, the duration of which is determined as a difference between the durations associated with the actual and target temperatures in the heat-up module, multiplied by an attenuation factor of 0.5 to 0.9, after which a time-modulated progressive swivelling phase with a predetermined swivelling duration is initiated, wherein the pulse duration of the vapour pulses to be initiated per time module is determined by means of the following formula:

$$t = \frac{t_{soll}}{\tau} \cdot \left(\tau^*\right) \qquad (3),$$

wherein

$t$ is the pulse duration in s/min at the respective actual moment, $t_{soll}$ is the target pulse length in s/min at the target temperature according to the heat-up module, $\tau$ is the swivelling duration and $\tau^*$ is the current reference time (begins after the end of the pause); or

d) if the actual temperature is too high by more than 15°K, a closed-loop controlled automatic transition to a heat-up characteristic with a shorter heat-up duration is carried out, wherein a "heating pause" is first initiated, in order to reduce the actual temperature, the duration of which is determined as a difference between the heat-up time at the target temperature according to the initially selected heat-up characteristic and the heat-up time at the target temperature according to the new heat-up characteristic with a shorter heat-up duration, multiplied by an attenuation factor between 0.5 and 0.9, after which a time-modulated progressive swivelling phase with heat carrier medium pulses is initiated in a manner similar to c).

7. The method according to claim 6, **characterized in that** when initiating a progressive swivelling phase, a duration is predetermined, which corresponds to 5 to 15, preferably 10 times the selected time module, wherein the predetermined time acts as a correlation between the attenuation factor and the swivelling duration in such a manner that at a higher attenuation factor, the swivelling duration must be smaller and vice versa.

8. The method according to one of the claims 2 to 7, **characterized in that** during the stationary heating period, the average value of the temperature which is determined from the start of the respective heat carrier medium pulse over a measuring time of 40 to 90%, preferably 75%, of the pulse length to be triggered, and depending on the measured temperature difference between the average value of the actual temperature and the target temperature at the end of the measuring time, a correction of the pulse duration is determined as a so-called corrected pulse duration, by which, after the measuring time, the further duration of the current heat carrier medium pulse is shortened or extended.

9. The method according to claim 8, **characterized in that** the corrected pulse duration for shortening or extending the current heat carrier medium pulse is determined as follows:

$$t_{Korr} = t_{Soll} \pm t_{Soll} \cdot K \qquad (4),$$

wherein

$t_{Korr}$ is the corrected pulse duration, $t_{Soll}$ is the pulse duration at the target temperature (the value of the target temperature is determined from the pulse duration module) and K is a temperature-dependent correction factor; and in case of a positive temperature difference, the subtraction of equation (4) is used, and in case of a negative temperature difference, the sum of the equation (4) is used.

10. The method according to one of the claims 2 to 9, **characterized in that** during the closed-loop control in the stationary heating period, after the initiation of the first heat carrier medium pulse, a "gliding" adjustment of the target pulse length is carried out for all following pulses, when the deviations between the actual temperature and the target temperature amount to at least 0.5 °K and the sign of the currently determined temperature deviation corresponds to the deviations determined for a given number of immediately preceding vapour pulses, wherein a new target pulse duration $t_{sollneu}$ is calculated as follows:

$$t_{soll\,neu} = t_{soll} \pm t_{soll} \cdot \alpha \cdot K \qquad (5),$$

wherein
$t_{Soll}$ is the last updated target impulse length, $K$ is the currently determined value of the temperature-dependent correction factor and $\alpha$ is an attenuation factor of between 0.3 and 1, preferably 0.5.

11. The method according to one of the claims 2 to 10, **characterized in that** a manufacturing period for forming and/or fixing molded parts is initiated when a closed-loop control deviation has fallen at least once below a predefined tolerance value when comparing the target/actual temperatures, the supply of the heat carrier medium during the manufacturing period is synchronized with the moment at which a signal from the sequence controller of the manufacturing machine is activated, and in the subsequent manufacturing period, the closed-loop control according to the stationary heating period is maintained, wherein the initiation of a heat carrier medium pulse is triggered by the signal from the sequence controller of the manufacturing machine and the initiation and temporal measurement of the heat carrier medium pulses is adjusted in a closed-loop controlled manner to the moment at which the signal is triggered in synchronicity with the cycle and to the duration of the manufacturing cycle.

12. The method according to claim 11, **characterized in that** with regard to the time-modulated closed-loop control in the manufacturing period two cases must be distinguished, wherein in the first case, when the heat carrier medium is already being supplied at the time at which the signal selected from the sequence controller of the manufacturing machine is triggered, after this time, the heat carrier medium is subsequently introduced with the calculated target pulse duration and an extended pause time is determined according to the following equation and triggered:

$$t_{v,P} = \frac{t_{i,V} + t_{soll}}{t_{soll}} \cdot (ZM - t_{soll}) \qquad (6),$$

wherein

$t_{v,P}$ is the extended pause, $t_{i,V}$ is the pulse duration that was triggered before the signal and $ZM$ is the selected time module in seconds,
and in the second case, when the adjusting valve for the vapour supply is closed at the time at which the signal selected from the sequence controller of the manufacturing machine is triggered, the valve is opened again and the heat carrier medium is introduced with the calculated target pulse duration and an interruption of the heat carrier medium supply in the form of an extended pause $t_{V,P}$ is determined according to the following equation and triggered:

$$t_{V,P} = t_{R,P} + t_P \qquad (7),$$

wherein, $t_{R,P}$ is the residual pause and $t_P$ is the target pause according to the time-modulated closed-loop control.

13. The method according to one of the claims 11 or 12, **characterized in that** in the time-modulated closed-loop control in the manufacturing period, the time interval between two identical signals of adjacent cycles is determined or already given, the target pulse duration is determined according to the following equation:

$$t_{Z,soll} = \frac{t_{soll}}{ZM} \cdot t_{Zykl} \qquad (8),$$

wherein

$t_{Z,soll}$ is the pulse duration/cycle time, $t_{soll}$ is the pulse length of the last time-modulated pulse, ZM is the selected time module in seconds and $t_{Zykl}$ is the cycle time in seconds;
and the target pulse $t_{Z,soll}$ is triggered at the start of the signal.

14. The method according to claim 13, **characterized in that** when the measured current cycle time exceeds a given target value, an adjustment of the heat carrier medium pulse duration is carried out in the following cycle, in accordance with the following equation:

$$t_{Z_{Korr}} = \frac{t_{Z\,soll} \cdot t_{Zykl,abw}}{t_{Zykl_{soll}}} \qquad (9),$$

wherein $t_{ZKorr}$ is the corrected pulse duration for the following cycle, $t_{Z,soll}$ is the target pulse duration, $t_{Zykl,abw}$ is the deviating cycle duration and $t_{Zyklsoll}$ is the target cycle duration.

15. The method according to one of the claims 12 to 14, **characterized in that** in case of an interruption of a predetermined cycle duration a switchover to a time-modulated closed-loop control is automatically performed for a predetermined time.

**Revendications**

1. Procédé de mise à température et de régulation d'une température d'un outil chauffé par un fluide caloporteur liquide et/ou sous forme de vapeur avec au moins un circuit de chauffage pour la mise en forme et/ou la fixation de pièces moulées en matériaux polymères thermodurcissables ou réticulables, et des moyens pour la réalisation d'une comparaison entre valeur réelle et valeur de consigne d'une température réelle mesurée en tant que valeur réglable avec une température consigne définie, une unité de contrôle et de régulation, un profil de chauffage, un module de mise à température, un module de pivotement et un module de durée d'impulsion, **caractérisé en ce que** avant le début d'un processus de mise à température et de régulation, un profil de chauffage propre à un circuit de chauffage est déposé dans la mémoire de l'unité de contrôle et de régulation pour servir de base pour la régulation de la température de l'outil, ledit profil étant formé au moins par le module de mise à température avec des durées de mise à température dépendantes de la température consigne définie et des caractéristiques de mise à température propres au circuit de chauffage, par un premier et un second module de pivotement avec des valeurs concernant la durée de pivotement dépendantes de la température consigne et des caractéristiques de mise à température, où le module de pivotement contient le champ de travail en termes de relation entre la durée de pivotement, la caractéristique de mise à température et la température consigne, basée sur une forme spécifique d'une fonction potentielle à exposant réciproque ou sur une relation logarithmique, et par le module de durée d'impulsion avec des durées d'impulsion consignes pour l'apport de fluide caloporteur en fonction de la température consigne et des caractéristiques de mise à température, où les modules individuels sont associés à une température spécifique du fluide caloporteur et une caractéristique de mise à température propre au circuit de chauffage est sélectionnée avant le début de la mise à température.

**2.** Procédé selon la revendication 1, **caractérisé en ce que** le processus de mise à température et de régulation est divisé en au moins deux périodes, une période de mise à température avec au moins une phase de mise à température et au moins une phase de pivotement et une période de chauffage stationnaire avec un comportement de régulation différent, où la période de chauffage stationnaire est destinée à la régulation continue du chauffage de l'outil afin de maintenir un état de chauffage stationnaire, pendant les périodes, le fluide caloporteur est amené au circuit de chauffage, lors de la phase de pivotement l'apport de fluide caloporteur est interrompu pour une durée réglable, la température réelle au niveau de l'outil est mesurée une première fois au cours de la période de pivotement, directement au niveau de l'entrée du fluide caloporteur dans l'outil et l'apport de fluide caloporteur au cours de la période de chauffage stationnaire est interrompue pour une durée réglable en fonction de la comparaison entre la température consigne et la température réelle, de telle manière que des impulsions de fluide caloporteur de longueur ou durée différente sont générées, si nécessaire avec des interruptions complètes, pour une durée réglable, de l'apport en fluide caloporteur, en tant que temps de pause, et les modifications dépendantes de la température sont mises en oeuvre par un apport de fluide caloporteur via une vanne pouvant être commutée entre une position « ouverte » et une position « fermée » , où l'actionnement pour une durée réglable de la vanne est mise en oeuvre au moyen un algorithme de régulation prédéfini.

**3.** Procédé selon la revendication 2, **caractérisé en ce que** lors de la période de mise à température, la phase de mise à température **caractérisée par** un apport continu de fluide caloporteur est arrêtée dans l'hypothèse où une température réelle associée à une caractéristique de mise à température prédéfinie à partir du profil de chauffage se situe sous la température consigne d'un certain montant de 2 à 10% de la température consigne.

**4.** Procédé selon l'une des revendications 1 à 3, **caractérisé en ce que** lors de la première phase de pivotement, des impulsions de fluide caloporteur se raccourcissant de manière dégressive modulée dans le temps sont introduites, afin de rapprocher de manière dosée la température réelle de la température consigne, la première comparaison entre la température réelle et la température consigne est réalisée au début du dernier module de temps de cette phase de pivotement, où en cas de déviations de la température réelle de la température consigne supérieures à une valeur limite basse inférieure à la température consigne ou supérieures à une valeur limite haute supérieure à la température consigne, une prolongation ou un raccourcissement, si nécessaire jusqu'à la valeur 0, de la durée d'impulsion de fluide caloporteur du dernière module de temps de la première phase de pivotement est réalisée, et à la fin de la première phase de pivotement, une seconde comparaison entre la température consigne et la température réelle est réalisée, où en cas de déviations à l'intérieur d'une plage de tolérance, une transition vers une période de chauffage stationnaire se produit, et en cas de déviations en dehors de la plage de tolérance, d'autres corrections par régulation sont initiées.

**5.** Procédé selon la revendication 4, **caractérisé en ce que** la durée des impulsions de fluide caloporteur pour la première phase de pivotement dégressive modulée dans le temps $\tau$ est déterminée selon la formule de calcul suivante :

$$t = ZM - \frac{(ZM - t_{soll})}{\tau} \cdot \tau'' \qquad (1),$$

où

t est la durée d'impulsion à l'instant réel respectif, $t_{soll}$ est la durée d'impulsion consigne selon le module de durée d'impulsion, $\tau''$ est le temps de référence actuel après le début de la phase de pivotement, $\tau$ est la durée de la phase de pivotement en min (durée de pivotement commence à 1) et *ZM* est le module de temps en secondes ;
et la durée de pivotement est déduite du premier module de pivotement.

**6.** Procédé selon l'une des revendications 4 ou 5, **caractérisé en ce que** les corrections sont effectuées de la manière suivante :

a) si la température réelle est trop basse de 5 à 15°K, une durée de réchauffement est d'abord initiée, dont la durée d'introduction de fluide caloporteur est déduite du module de mise à température de telle manière que la différence entre la durée de mise à température à la température consigne et la durée de mise à température à la température réelle est déterminée et multipliée par un facteur d'atténuation entre 0,5 et 0,9 et une seconde phase de pivotement dégressive modulée dans le temps est initiée juste après, dont la durée de l'impulsion de vapeur est calculée selon l'équation (1) en prenant en compte la durée de pivotement déduite du second module de pivotement,

ou

b) si la température réelle est trop basse de plus de 15°K, un passage vers une caractéristique de chauffage avec une durée de chauffage plus longue est automatiquement effectué par réglage et une période de réchauffement est initiée dont la durée est déterminée en fonction de l'ampleur de la déviation selon la formule suivante :

$$t_N = \left(t_{A_{soll}} - \tau_2\right) - t_{A_{ist}} \qquad (2),$$

où $t_N$ est le temps de réchauffement, $t_{Asoll}$ est le temps de mise à température selon la température consigne et la nouvelle caractéristique mise à température, $t_{Aist}$ est le temps de mise à température selon la température réelle et la nouvelle caractéristique de mise à température et $\tau_2$ est la durée de pivotement selon la deuxième matrice de pivotement et la nouvelle caractéristique de mise à température et la température consigne ; et un seconde phase de pivotement dégressive modulée dans le temps est ensuite initiée et réglée de la même manière que après l'initiation de la seconde phase de pivotement selon a)

ou

c) si la température réelle est trop élevée de 5 à 15°K, une pause est d'abord initiée dont la durée est déterminée comme étant la différence entre les durées associées à la température réelle et à la température consigne dans le module de mise à température, multipliée par un facteur d'atténuation prédéfini compris entre 0,5 et 0,9, et une phase de pivotement progressive modulée dans le temps avec une durée de pivotement prédéfinie est initiée, où la durée d'impulsion des impulsions de vapeur à introduire par module de temps est déterminée selon la formule de calcul suivante :

$$t = \frac{t_{soll}}{\tau} \cdot \left(\tau^*\right) \qquad (3),$$

où

t est la durée d'impulsion en s/min à l'instant d'impulsion respectif,

$t_{soll}$ est la longueur d'impulsion consigne en s/min selon la température consigne conforme au module de mise à température, $\tau$ est la durée de pivotement et $\tau^*$ est la durée de référence actuelle (débute après la fin du temps de pause) ;

ou

d) si la température réelle est trop élevée de plus de 15°K, un passage vers une caractéristique de mise à température avec une durée de mise à température plus courte, où une « pause de chauffage » est d'abord initiée afin de réduire la température réelle, la durée de ladite pause est déterminée comme étant la différence entre la durée de mise à température à la température consigne selon la caractéristique de mise à température initialement sélectionnée et la durée de mise à température à la température consigne selon la caractéristique de mise à température ayant une durée de mise à température plus courte, multipliée par une facteur d'atténuation compris entre 0,5 et 0,9, et une phase de pivotement progressive modulée dans le temps avec des impulsions de fluide caloporteur est initiée de manière similaire à c).

7. Procédé selon la revendication 6, **caractérisé en ce que** lors de l'initiation d'une phase de pivotement progressive, une durée qui correspond à 5 à 15, de préférence 10 fois le module de temps sélectionné, est définie, où la durée définie agit comme une corrélation entre le facteur d'atténuation et la durée de pivotement de telle manière que lorsqu'un facteur d'atténuation plus élevé est choisi, la durée de pivotement doit être plus petite est inversement.

8. Procédé selon l'une des revendications 2 à 7, **caractérisé en ce que** au cours de la période de chauffage stationnaire, la valeur moyenne de la température, laquelle est déterminée depuis le début de l'impulsion de fluide caloporteur respective sur une période de mesure de 40 à 90%, de préférence 75% de la longueur d'impulsion à déclencher et qu'à la fin de la période de mesure, une correction de la durée d'impulsion appelée durée d'impulsion corrigée est déterminée en fonction de la différence de température mesurée entre la valeur moyenne de la température réelle et la température consigne, ladite durée d'impulsion corrigée servant à raccourcir ou prolonger la durée de l'impulsion de fluide caloporteur actuelle après la durée de mesure.

9.  Procédé selon la revendication 8, **caractérisé en ce que** la durée d'impulsion corrigée pour raccourcir ou prolonger l'impulsion de fluide caloporteur actuelle est déterminée comme suit :

$$t_{Korr} = t_{soll} \pm t_{soll} \cdot K \qquad (4),$$

où

t$_{Korr}$ est la durée d'impulsion corrigée, t$_{soll}$ est la durée d'impulsion à la température consigne (la valeur de la température consigne est déduite du module de durée d'impulsion) et K est un facteur de correction dépendant de la température,
et en cas de différence de température positive, la soustraction de l'équation (4) est appliquée et en cas de différence de température négative, l'addition de l'équation (4) est appliquée.

10. Procédé selon l'une des revendications 2 à 9, **caractérisé en ce que** pendant la régulation dans la phase de chauffage stationnaire, après l'introduction de la première impulsion de fluide caloporteur, un ajustement « glissant » de la longueur de l'impulsion consigne est effectué pour toutes les impulsions suivantes lorsque les déviations entre la température réelle et la température consigne sont d'au moins 0,5 °K et le signe de la déviation de température actuellement déterminée correspond aux déviations déterminées lors d'un nombre défini d'impulsions de vapeur immédiatement précédentes, où une nouvelle durée d'impulsion consigne t$_{sollneu}$ est calculée comme suit :

$$t_{soll\,neu} = t_{soll} \pm t_{soll} \cdot \alpha \cdot K \qquad (5),$$

où

t$_{soll}$ est la dernière longueur d'impulsion consigne actualisée, K est la valeur du facteur de correction dépendant de la température actuellement déterminée et $\alpha$ est un facteur d'atténuation dont le montant est compris entre 0,3 et 1, de préférence égal à 0,5.

11. Procédé selon l'une des revendications 2 à 10, **caractérisé en ce que** une période de production pour la mise en forme et/ou la fixation de parties moulées est initiée quand une valeur de tolérance prédéfinie d'une déviation de régulation est dépassée à la baisse au moins une fois lors de la comparaison entre température consigne et température réelle dans la phase de chauffage stationnaire, l'apport du fluide caloporteur au cours de la période de production est synchronisé avec le moment de déclenchement d'un signal de la commande de déroulement de la machine de production et dans la période de production suivante, la régulation selon la période de chauffage stationnaire est maintenue, où l'introduction d'une impulsion de fluide caloporteur est déclenchée par le signal de la commande de déroulement de la machine de production et l'introduction et la mesure temporelle d'impulsions de fluide caloporteur est réglée sur le moment du déclenchement, synchrone avec le cycle, du signal et la durée du cycle de production.

12. Procédé selon la revendication 11, **caractérisé en ce que** lors de la régulation modulée au cours de la période de production, deux cas distincts se présentent, où dans le premier cas, lorsque du fluide caloporteur est déjà amené au moment du déclenchement du signal sélectionné de la commande de déroulement de la machine de production, à partir de ce moment, du fluide caloporteur est par la suite introduit selon la durée d'impulsion consigne calculée et une période de pause prolongée est déterminée selon l'équation suivante et déclenchée :

$$t_{v,P} = \frac{t_{i,v} + t_{soll}}{t_{soll}} \cdot (ZM - t_{soll}) \qquad (6),$$

où

t$_{v,P}$ est la pause prolongée, t$_{i,v}$ est la durée d'impulsion déclenchée avant le signal et ZM est le module de temps sélectionné en secondes,
et dans le deuxième cas, lorsque la vanne de réglage pour l'alimentation en vapeur est fermée au moment du déclenchement du signal sélectionné de la commande de déroulement de la machine de production, la vanne est ouverte et du fluide caloporteur est introduit selon la durée d'impulsion consigne et une interruption de l'alimentation en fluide caloporteur sous forme d'un temps de pause $t_{v,p}$ prolongé est déterminée selon l'équation suivante et déclenchée :

$$t_{v,P} = t_{R,P} + t_P \qquad (7),$$

où $t_{R,P}$ est le temps de pause et $t_P$ est la pause consigne selon la régulation modulée dans le temps.

**13.** Procédé selon l'une des revendications 11 ou 12, **caractérisé en ce que** lors d'une régulation modulée dans le temps dans la période de production, le temps entre deux signaux identiques de cycles avoisinants est déterminé ou ce temps est déjà prédéfini, la durée d'impulsion consigne est déterminée selon l'équation suivante :

$$t_{Z,soll} = \frac{t_{soll}}{ZM} \cdot t_{Zykl} \qquad (8),$$

où

$t_{Z,soll}$ est la longueur d'impulsion/la durée du cycle, $t_{soll}$ est la longueur d'impulsion de la dernière impulsion modulée dans le temps, ZM est le module de temps sélectionné en secondes et $t_{Zykl}$ est la durée du cycle en secondes ;
et l'impulsion consigne $t_{Z,soll}$ est déclenchée au début du signal.

**14.** Procédé selon la revendication 6, **caractérisé en ce que** en cas de dépassements à la hausse du temps de cycle actuel mesuré par une valeur consigne prédéfinie, un ajustement de la durée d'impulsion de fluide caloporteur est effectuée lors du cycle suivant, selon l'équation suivante :

$$t_{Z_{Korr}} = \frac{t_{Z,soll} \cdot t_{Zykl,abw}}{t_{Zykl_{soll}}} \qquad (9),$$

où $t_{ZKorr}$ est le temps d'impulsion corrigé pour le cycle suivant, $t_{Z,Soll}$ est la durée d'impulsion consigne, $t_{Zykl,abw}$ est la durée de cycle déviante et $t_{Zykl\,soll}$ est la durée de cycle consigne.

**15.** Procédé selon l'une des revendications 12 à 14, **caractérisé en ce que** lors d'une interruption d'une durée de cycle définie, une commutation automatique vers une régulation modulée dans le temps est réalisée pour une période prédéterminée.

Fig. 1

Fig. 2

Impulszeiten von Werkzeugen mit unterschiedlicher Aufheizcharakteristik, Dampftemperatur 180°C

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4141996 A1
- US 3735805 A

- DE 4307347 A1

**In der Beschreibung aufgeführte Nicht-Patentliteratur**

- *Zeitschrift Plastverarbeiter,* 1984, vol. 35 (5), 74-81